# EUROPEAN PATENT APPLICATION

(11) **EP 4 407 453 A1**
(43) Date of publication of application: **31.07.2024**
(21) Application number: 22882999.0
(22) Date of filing: 22.10.2022
(51) Int. Cl.: G06F 9/48

(54) **APPLICATION RUNNING METHOD AND RELATED DEVICE**

(30) Priority: 22.10.2021 CN 202111236221
(71) Applicant: Huawei Technologies Co., Ltd., Shenzhen, Guangdong 518129 (CN)
(72) Inventor: WANG, Wei, Shenzhen, Guangdong 518129 (CN); OUYANG, Chufei, Shenzhen, Guangdong 518129 (CN); LIN, Junru, Shenzhen, Guangdong 518129 (CN)
(74) Representative: MERH-IP Matias Erny Reichl Hoffmann Patentanwälte PartG mbB
(86) International application number: PCT/CN2022/126849
(87) International publication number: WO 2023/066395

(57) **Abstract**

This application provides an application running method. The method includes: When running a target application, a first terminal device obtains device information and/or a software running environment of a second terminal device; when the device information and/or the software running environment of the second terminal device meet/meets an execution requirement of a first task of the target application, the first terminal device transfers task running information of the first task to the second terminal device, and the first terminal device does not execute the first task; and the second terminal device executes the first task based on the task running information related to the first task. In this application, on a premise that the second terminal device can execute a part of tasks of the target application, the part of tasks of the target application are transferred to the second terminal device for execution, so that a computing load of the first terminal device can be reduced.

## Description

This application claims priorities to Chinese Patent Application No. 202111236221.5, filed with the China National Intellectual Property Administration on October 22, 2021 and entitled "APPLICATION RUNNING METHOD AND RELATED DEVICE", and to Chinese Patent Application No., filed with the China National Intellectual Property Administration on October 21, 2022 and entitled "APPLICATION RUNNING METHOD AND RELATED DEVICE", both of which are incorporated herein by reference in their entireties.

### TECHNICAL FIELD

This application relates to the computer field, and in particular, to an application running method and a related device.

### BACKGROUND

Currently, applications become larger and more complex. For example, video applications develop from displaying 1080p real-time images to 2K and 4K images. In the future, high-quality images such as 8K images will emerge, posing higher requirements on device computing capabilities.

In recent years, with popularity of smartphones, mobile applications develop rapidly. However, current development and running manners of the mobile applications are mainly designed based on a single device. Running applications on the single device has performance and experience bottlenecks. Main problems are as follows: Limited by a CPU core frequency and a GPU core frequency, a computing capability of the single device is limited. Compared with a large-scale server, the single device requires a designer to strike a balance between the computing capability, a size, and costs. Similarly, storage and communication capabilities of the single device are also limited by a design of the device, and cannot meet performance requirements of upper-layer applications.

### SUMMARY

An embodiment of this application provides a distributed application running method, where the method is applied to a first terminal device, the first terminal device is communicatively connected to a second terminal device, the second terminal device may be locally or remotely, and the method includes: when running a target application, obtaining device information and/or a software execution environment of the second terminal device; and when the device information and/or the software execution environment of the second terminal device meet/meets an execution requirement of a first task of the target application, transferring task running information related to the first task to the second terminal device, so that the second terminal device executes the first task based on the task running information, and the first terminal device does not execute the first task. According to the foregoing method, on a premise that the second terminal device can execute a part of tasks of the target application, the part of tasks of the target application are transferred to the second terminal device for execution, so that a computing load of the first terminal device can be reduced. In addition, if hardware performance of the first terminal device in which the target application is located, for example, a display resolution or a CPU or GPU computing capability, is inferior to hardware performance of the second terminal device, a task transferred by using the method can obtain better application performance on the second terminal device.

It should be understood that "when running a target application" herein may be understood as starting the target application or in a process of running the target application.

It should be understood that the first task may be one of a UI display task, an image rendering task, a logical status update task, an AI task, or a data processing or analysis task. The first task may alternatively be another task that needs to consume a large quantity of computing resources and/or storage resources and/or communication resources. The first task may be a task that cannot be run when currently available computing resources and/or storage resources or communication resources of the first terminal device are insufficient, for example, whether the first terminal device can normally run the first task (for example, whether frame freezing occurs or whether a large amount of time needs to be spent), whether another task is affected when the first terminal device runs the first task, or whether the first terminal device is overheated when the first terminal device runs the first task.

It should be understood that the first task may be a task category obtained through pre-classification. For example, the first task is a logical status update task and a rendering task obtained through pre-classification in a game application, or a plurality of subtasks obtained by splitting a rendering task. For another example, a text chat and a video call at WeChat are two subtasks that can be obtained through splitting. Generally, only one task can be executed at a time in a single machine. In this example, the task may be split into two subtasks, and one of the two subtasks is transferred to the second terminal device for running.

It should be understood that the first terminal device may alternatively transfer a plurality of tasks to the second terminal device, or transfer a plurality of tasks to different terminal devices for execution. This is not limited herein.

It should be understood that the second terminal device may not only execute the first task based on the task information of the first task, but also consider a balance between information such as a status of the second terminal device, an application execution effect, and user experience, for example, a balance between a display effect and dynamic resource utilization of the device, to finally achieve optimal display. An execution effect, execution efficiency, and the like of executing the first task by the second terminal device may be enhanced compared with those of executing the first task by the first device.

It should be understood that the device information and the software running environment may change based on a change of an application scenario, but there are invariants, for example, a battery level, a CPU usage, a memory usage, and a network load status of the device, and a runtime status of an application process on the current device. A change part includes but is not limited to: For example, a subtask obtained after the target application of the first device is split may include UI window information. In this case, the first device also needs to collect window information on the second device.

In a possible implementation, the first terminal device and the second terminal device may communicate with each other through near field communication, or through far field communication, that is, communicate with each other in at least one manner of an Internet network, Wi-Fi, Bluetooth, ultra-wideband, ZigBee ZigBee, RFID, 4G, 5G, LoRa, SIGFOX, Z-Wave, and NB-loT. For example, the first terminal device and the second terminal device are connected in a plurality of manners of the Internet network, Wi-Fi, Bluetooth, the ultra-wideband, ZigBee ZigBee, RFID, 4G, 5G, LoRa, SIGFOX, Z-Wave, and NB-loT.

It should be understood that the first terminal device and the second terminal device may alternatively be connected in another wireless connection manner with a low delay (for example, 3GPP, non-3GPP, or a connection manner implemented based on a short-range technology). This is not limited herein.

It should be understood that, when the first task is a rendering task, in some scenarios, a display parameter (for example, a refresh rate, a screen size, or a refresh rate) of a display device of the first terminal device is different from a display parameter of a display device of the second terminal device, and the second terminal device may execute the first task based on the task running information related to the first task and the display parameter (for example, a resolution or a screen refresh rate of the display device) of the display device of the second terminal device. In this way, display content that adapts to the display device of the second terminal device may be displayed.

In a possible implementation, before the transferring task running information related to the first task to the second terminal device, the method further includes: presenting first selection information, where the first selection information indicates at least one task of the target application, and the device information and/or the software execution environment of the second terminal device meet/meets an execution requirement of the at least one task; receiving a first input fed back by a user based on the first selection information; and enabling, based on the first input including the first task, an action of transferring the task running information related to the first task to the second terminal device. The target task may include a plurality of subtasks. The first terminal device may determine, from the plurality of subtasks based on the at least one task and the device information and/or the software execution environment of the second terminal device, a task (at least one task) that is suitable to be transferred to the second terminal device, and present the task to the user for selection by the user.

In a possible implementation, after the transferring task running information related to the first task to the second terminal device, the method further includes: transferring status data related to the first task to the second terminal device, where the status data is status data required when the second terminal device executes the first task. For example, in a projection scenario, the status data may be an intermediate status of a UI engine or data status information of an application. The status data may be input by the user on the first terminal device, or may be generated by the first terminal device.

In a possible implementation, the first terminal device may obtain device information of a terminal device that has a communication connection, determine, based on analysis of the device information, whether the terminal device has a capability of running a to-be-transferred task, and determine a part of tasks to be transferred to the terminal device.

For example, a transfer object is the first task. In a possible implementation, the software running environment information includes component information, the component information indicates whether a running component of the target application is deployed on the second terminal device, and the running component is configured to have a capability of executing the first task.

The running component may be an AI engine, and the AI engine may be configured to execute an AI task; the running component may be a rendering engine, and the rendering engine may be configured to execute a rendering task; or the running component may be a logical engine and a physical engine, and the logical engine and the physical engine may be configured to execute a logical status update task. If the running component having the capability of executing the first task is not deployed on the second terminal device, the first task does not need to be transferred to the second terminal device for execution.

The first task may be one of a UI display task, an image rendering task, a logical status update task, an AI task, or a data processing or analysis task. The running component may be an AI engine, and the AI engine may be configured to execute an AI task; the running component may be a rendering engine, and the rendering engine may be configured to execute a rendering task; or the running component may be a logical engine and a physical engine, and the logical engine and the physical engine may be configured to execute a logical status update task. If the running component having the capability of executing the first task is not deployed on the second terminal device, the first task does not need to be transferred to the second terminal device for execution.

The software running environment may include a system environment of running an application, and devices at both ends need to have some necessary running components. For example, a video card component may be required for a game, and a running environment of Android 4.0 or a later version may be required for a mobile application.

It should be understood that a running component may be deployed on the first terminal device. When the first terminal device runs the target application in a standalone mode, the first terminal device may execute the first task by using the running component, and the running component deployed on the first terminal device is consistent with (or basically consistent with) the running component deployed on the second terminal device.

For example, the transfer object is the first task. In a possible implementation, the device information may include power supply information. The power supply information may be available power and a charging mode (for example, an active input or battery power supply) of the second terminal device. For example, when the power supply information indicates that the available power of the second terminal device is small, it may be determined that the first task does not need to be transferred to the second terminal device for execution.

For example, the transfer object is the first task. In a possible implementation, the device information may include processor information. A processor may be a CPU, a GPU, a TPU, an NPU, or the like. The processor information may be but is not limited to a CPU model/dominant frequency, a GPU model/dominant frequency, a current CPU/GPU load, or the like. Because some tasks have specific requirements for a type, a processing capability, and a currently available resource of a processor, when a task requirement is not met, it may be determined that the first task does not need to be transferred to the second terminal device for execution. Alternatively, when a load of a processor of the current device is high, and the second terminal device has sufficient processor resources, it may be determined that task transfer is immediately performed.

For example, the transfer object is the first task. In a possible implementation, the device information may include memory information, for example, a memory size. When a requirement of the first task for a memory size is not met, it may be determined that the first task does not need to be transferred to the second terminal device for execution.

For example, the transfer object is the first task. In a possible implementation, the device information may include a transmission bandwidth, and the transmission bandwidth may be an available bandwidth of a current network. In some implementations, to ensure synchronization of task execution, it needs to be ensured that there is no delay (or a very small delay) when the first task is transmitted to the second terminal device, and it needs to be ensured that a transmission bandwidth between the first terminal device and the second terminal device meets a requirement corresponding to the first task. When the requirement is not met, it may be determined that the first task does not need to be transferred to the second terminal device for execution.

For example, the transfer object is the first task. In a possible implementation, the device information may include input device information. The input device information may include an input device type. An input device may be an audio input, a mouse input, a keyboard input, or the like. In some tasks, for example, a task involving interaction with the user, the first task further needs to support an input of the user. However, because the first task is transferred to the second terminal device for execution, the second terminal device needs to have the input device type required by the first task. When the requirement is not met, it may be determined that the first task does not need to be transferred to the second terminal device for execution.

For example, the transfer object is the first task. In a possible implementation, the device information may include output device information. The output device information may include an output device type. An output device may be an audio output, an image/video output, or the like. The output device information may further be a display attribute of a display device, for example, a screen resolution and a refresh rate. In some tasks, for example, a task involving interaction with the user, the first task further needs to support an output (for example, a rendering task requires that a display device exists and has a parameter requirement of the display device). Because the first task is transferred to the second terminal device for execution, the second terminal device needs to have the output device type and an attribute of the output device that are required by the first task. When the requirement is not met, it may be determined that the first task does not need to be transferred to the second terminal device for execution.

For example, the transfer object is the first task. In a possible implementation, the device information may include network load information. The network load information may include a working status of a network interface card of the current device, a network bandwidth usage, end-to-end delay time, and the like. Because some tasks have specific requirements for a network processing capability and a currently available network resource, when a task transfer requirement is not met, it may be determined that the first task does not need to be transferred to the second terminal device for execution. Alternatively, when a network load of the current device is high, and the second terminal device has sufficient network resources, it may be determined that task transfer is immediately performed.

In a possible implementation, the device information includes a device status of the terminal device and/or a running status of the running component. Being in the device status means that the device is powered on, and may run or may not run some applications. Correspondingly, being not in the device status includes cases such as the device is powered off or the device is in a sleep mode or a screen-off mode.

When the device status indicates that the second terminal device is not started, the task running information related to the first task includes first indication information, and the first indication information is used to trigger starting of the second terminal device, and indicates that the second terminal device runs the running component and executes the first task by using the running component.

Alternatively, when the device status indicates that the second terminal device is started, and the running status indicates that the second terminal device does not run the running component, the task running information related to the first task includes second indication information, and the second indication information indicates that the second terminal device runs the running component and executes the first task by using the running component.

Alternatively, when the device status indicates that the second terminal device is started, and the running status indicates that the second terminal device runs the running component, the task running information related to the first task includes third indication information, and the third indication information indicates that the second terminal device executes the first task by using the running component.

In a possible implementation, if the first terminal device determines a plurality of terminal devices that meet the requirement, a part of (or all) the terminal devices may be selected from the plurality of terminal devices as transfer objects of the first task.

In a possible implementation, device information of a plurality of terminal devices connected to the first terminal device may be obtained, where the plurality of terminal devices include the second terminal device; and selection for the second terminal device in the plurality of terminal devices is enabled.

In a possible implementation, second selection information may be presented, where the second selection information indicates the user to perform selection from the plurality of terminal devices; a second input fed back by the user based on the second selection information is received; and selection for the second terminal device in the plurality of terminal devices is enabled based on the second input including the second terminal device.

In a possible implementation, the first terminal device may further select, from the plurality of terminal devices based on the device information and/or application information of the second terminal device, device information and/or application information that best meet/meets the execution requirement of the first task, and enable selection for the second terminal device in the plurality of terminal devices. Best meeting the execution requirement may be understood as selecting a terminal device with optimal performance from terminal devices that meet the execution requirement of the first task.

In a possible implementation, a task of the target application includes the first task and a second task, and the method further includes: executing the second task.

In the game application, to ensure normal running of the application, real-time data synchronization between the first terminal device and the second terminal device needs to be ensured, and a synchronization frequency needs to be very high. For example, status synchronization needs to be performed once for each frame of data. For a 60 fps game, a synchronization operation needs to be performed once every 16 ms. Therefore, a synchronization delay requirement is very high. In an existing implementation, when the first terminal device and the second terminal device are heterogeneous devices, the first terminal device needs to serialize to-be-sent data to obtain binary data, and transfer the binary data to the second terminal device. The second terminal device needs to deserialize the binary data to obtain data that can be identified by the second terminal device. The serialization and deserialization operations cause a specific delay, which is not allowed in a scenario that requires high synchronization, for example, a game.

In this embodiment of this application, the task running information related to the first task may include execution data and index information of the execution data, where the execution data is data required for executing the first task, the index information includes a memory address, the memory address is an address of available storage space on the second terminal device, and the index information indicates the second terminal device to store the execution data in the storage space corresponding to the memory address.

To be specific, the available storage space on the second terminal device may be first obtained, and the task running information and the address of the storage space selected by the first terminal device are transferred to the second terminal device. The second terminal device may store, based on the index information, the execution data in the storage space corresponding to the memory address, and when executing the first task, obtain the execution data from the storage space corresponding to the memory address. Because a task component on the second terminal device may directly execute the first task, format conversion does not need to be performed on the execution data, and the serialization and deserialization operations are not required, so that a processing delay is reduced.

In a possible implementation, the first task is one of a UI display task, an image rendering task, a logical status update task, an AI task, or a data processing or analysis task.

According to a second aspect, this application provides an application running method, where the method is applied to a target system, the target system includes a first terminal device and a second terminal device, the first terminal device is communicatively connected to the second terminal device, and the method includes:
when running a target application, the first terminal device obtains device information and/or a software execution environment of the second terminal device;
when the device information and/or the software execution environment of the second terminal device meet/meets an execution requirement of a first task of the target application, the first terminal device transfers task running information of the first task to the second terminal device, and the first terminal device does not execute the first task; and
the second terminal device executes the first task based on the task running information related to the first task.

In a possible implementation, before the task running information related to the first task is transferred to the second terminal device, the method further includes: The first terminal device presents first selection information, where the first selection information indicates at least one task of the target application, and the device information and/or the software execution environment of the second terminal device meet/meets an execution requirement of the at least one task; and receives a first input fed back by a user based on the first selection information; and
the first terminal device enables, based on the first input including the first task, an action of transferring the task running information related to the first task to the second terminal device.

In a possible implementation, after the task running information related to the first task is transferred to the second terminal device, the method further includes:
the first terminal device transfers status data related to the first task to the second terminal device, where the status data is status data required when the second terminal device executes the first task.

In a possible implementation, the first terminal device and the second terminal device communicate with each other in at least one manner of near field communication, an Internet network, Wi-Fi, Bluetooth, ultra-wideband, ZigBee ZigBee, RFID, 4G, 5G, LoRa, SIGFOX, Z-Wave, and NB-loT.

In a possible implementation, the software execution environment includes:
component information, where the component information indicates whether a running component of the target application is deployed on the second terminal device, and the running component is configured to have a capability of executing the first task.

The execution requirement includes:
the running component is deployed on the second terminal device.

In a possible implementation, the device information includes at least one of the following information:
power supply information, processor information, memory information, a transmission bandwidth, input device information, output device information, and a network load.

In a possible implementation, the software execution environment includes a device status of the terminal device and/or a running status of the running component.

When the device status indicates that the second terminal device is powered off or in a sleep mode, a screen-off mode, or a screen-locked mode, the task running information related to the first task includes first indication information, and the first indication information indicates at least one of the following information: The second terminal device is powered on, or the sleep mode, the screen-off mode, or the screen-locked mode ends; the second terminal device runs the running component; and the second terminal device executes the first task by using the running component.

Alternatively, when the device status indicates that the second terminal device is started, and the running status indicates that the second terminal device does not run the running component, the task running information related to the first task includes second indication information, and the second indication information indicates at least one of the following information: The second terminal device runs the running component, and the second electronic device executes the first task by using the running component.

Alternatively, when the device status indicates that the second terminal device is started, and the running status indicates that the second terminal device runs the running component, the task running information related to the first task includes third indication information, and the third indication information indicates that the second terminal device executes the first task by using the running component.

In a game application, to ensure normal running of the application, real-time data synchronization between the first terminal device and the second terminal device needs to be ensured, and a synchronization frequency needs to be very high. For example, status synchronization needs to be performed once for each frame of data. For a 60 fps game, a synchronization operation needs to be performed once every 16 ms. Therefore, a synchronization delay requirement is very high. In an existing implementation, when the first terminal device and the second terminal device are heterogeneous devices, the first terminal device needs to serialize to-be-sent data to obtain binary data, and transfer the binary data to the second terminal device. The second terminal device needs to deserialize the binary data to obtain data that can be identified by the second terminal device. The serialization and deserialization operations cause a specific delay, which is not allowed in a scenario that requires high synchronization, for example, a game.

In this embodiment of this application, the task running information related to the first task may include execution data and index information of the execution data, where the execution data is data required for executing the first task, the index information includes a memory address, the memory address is an address of available storage space on the second terminal device, and the index information indicates the second terminal device to store the execution data in the storage space corresponding to the memory address.

To be specific, the available storage space on the second terminal device may be first obtained, and the task running information and the address of the storage space selected by the first terminal device are transferred to the second terminal device. The second terminal device may store, based on the index information, the execution data in the storage space corresponding to the memory address, and when executing the first task, obtain the execution data from the storage space corresponding to the memory address. Because a task component on the second terminal device may directly execute the first task, format conversion does not need to be performed on the execution data, and the serialization and deserialization operations are not required, so that a processing delay is reduced.

When the second terminal device completes execution of the first task and does not receive execution trigger of another task in the target application from the first terminal device, the second terminal device does not execute the another task of the target application. In this embodiment of this application, a lockstep synchronization mechanism based on a heterogeneous memory arrangement is used, a unified status synchronization data interface is designed, and data addresses of different platforms are packaged and notified to a peer end in sequence (for example, if a plurality of terminal devices are connected to the first terminal device, the first terminal device may transfer the task running information to different terminal devices in a preset sequence). In addition, a strictly limited synchronization method is performed in a lockstep manner (as a terminal device that receives the task running information, the terminal device does not perform other processing related to the target application than the received task running information).

In a possible implementation, the first task is one of a UI display task, an image rendering task, a logical status update task, an AI task, or a data processing or analysis task.

In a possible implementation, a task of the target application includes the first task and a second task, the first task and the second task are rendering tasks, the first task is used to draw a first application interface, the second task is used to draw a second application interface, and the first application interface and the second application interface are different interfaces. The first terminal device may execute the second task, and trigger a display device to display the second application interface. The second terminal device may trigger a display device to display the first application interface. It is equivalent to that content originally displayed on a same display may be split into content on a plurality of interfaces, and rendering and displaying are performed on different terminal devices.

In a possible implementation, a rendering task is used as an example. The second terminal device may execute the first task based on the task running information related to the first task and a display parameter (for example, a resolution or a screen refresh rate of the display device) of the display device of the second terminal device.

In a possible implementation, after executing the first task, the second terminal device may further feed back an execution result to the first terminal device.

This application further provides an application running method, where the method is applied to a first terminal device, the first terminal device is communicatively connected to a second terminal device, and the method includes: running a target application, where the target application includes a first task; the first task is a part of tasks in the target application; and the target application is an application having a dialog function, and the first task is UI display of a chat box of a part of or all chat objects, UI display of a video chat, or UI display of an audio chat; or the target application is a drawing application, a text editing application, an image editing application, or an audio and video editing application, and the first task is UI display of an editing tool interface or UI display of an editing object; and keeping execution of a second task, and transferring task running information related to the first task to the second terminal device, so that the second terminal device executes the first task based on the task running information, and the first terminal device does not execute the first task.

In a possible implementation, the application having a dialog function may include an instant messaging application, a social application, or the like. According to the application, a text dialog, an audio dialog, a video dialog, or the like may be performed with another contact.

For example, a current task of the application having a dialog function may include UI display of a chat interface and a video call, and the first terminal device may transfer task running information related to the video call to the second terminal device for execution.

For example, a current task of the application having a dialog function may include UI display of a chat interface, and the chat interface may include a plurality of contacts (namely, chat objects). The first terminal device may transfer UI display of a chat box of a part of the plurality of contacts to the second terminal device for execution.

In a possible implementation, the target application further includes the second task different from the first task.

The target application is the application having a dialog function, and the second task is UI display of a chat object different from that in the first task, UI display of a video chat, or UI display of an audio chat.

The target application is the drawing application, the text editing application, the image editing application, or the audio and video editing application, and the second task is UI display of an editing tool interface or UI display of an editing object.

The method further includes:
when device information of the second terminal device does not meet an execution requirement of the second task of the target application, keeping execution of the second task.

According to a third aspect, this application provides an application running apparatus, where the apparatus is used in a first terminal device, the first terminal device is communicatively connected to a second terminal device, and the apparatus includes:
an obtaining module, configured to: when a target application is run, obtain device information and/or a software execution environment of the second terminal device; and
a sending module, configured to: when the device information and/or the software execution environment of the second terminal device meet/meets an execution requirement of a first task of the target application, transfer task running information related to the first task to the second terminal device, so that the second terminal device executes the first task based on the task running information, and the first terminal device does not execute the first task.

In a possible implementation, the target application further includes a second task, and the apparatus further includes:
a task execution module, configured to: when the second terminal device executes the first task based on the task running information, keep execution of the second task on the first terminal device.

In a possible implementation, the apparatus further includes:
a receiving module, configured to: before the task running information related to the first task is transferred to the second terminal device, receive a first input of a user, where the first input indicates to transfer the task running information related to the first task to the second terminal device.

In a possible implementation, the apparatus further includes:
a presentation module, configured to: before the task running information related to the first task is transferred to the second terminal device, present first selection information, where the first selection information indicates at least one task of the target application, and the device information and/or the software execution environment of the second terminal device meet/meets an execution requirement of the at least one task.

The receiving module is specifically configured to:
receive a first input fed back by the user based on the first selection information, where the first input includes the first task.

In a possible implementation, the sending module is further configured to: after the task running information related to the first task is transferred to the second terminal device, transfer status data related to the first task to the second terminal device, where the status data is status data required when the second terminal device executes the first task.

In a possible implementation, the first terminal device and the second terminal device communicate with each other in at least one manner of near field communication, an Internet network, Wi-Fi, Bluetooth, ultra-wideband, ZigBee ZigBee, RFID, 4G, 5G, LoRa, SIGFOX, Z-Wave, and NB-loT.

In a possible implementation, the software execution environment includes:
component information, where the component information indicates whether a running component of the target application is deployed on the second terminal device, and the running component is configured to have a capability of executing the first task.

The execution requirement includes:
the running component is deployed on the second terminal device.

In a possible implementation, the device information includes at least one of the following information:
power supply information, processor information, memory information, a transmission bandwidth, input device information, output device information, and a network load.

In a possible implementation, the software execution environment includes a device status of the terminal device and/or a running status of the running component.

When the device status indicates that the second terminal device is powered off or in a sleep mode, a screen-off mode, or a screen-locked mode, the task running information related to the first task includes first indication information, and the first indication information indicates at least one of the following information: The second terminal device is powered on, or the sleep mode, the screen-off mode, or the screen-locked mode ends; the second terminal device runs the running component; and the second terminal device executes the first task by using the running component.

Alternatively, when the device status indicates that the second terminal device is started, and the running status indicates that the second terminal device does not run the running component, the task running information related to the first task includes second indication information, and the second indication information indicates at least one of the following information: The second terminal device runs the running component, and the second electronic device executes the first task by using the running component.

Alternatively, when the device status indicates that the second terminal device is started, and the running status indicates that the second terminal device runs the running component, the task running information related to the first task includes third indication information, and the third indication information indicates that the second terminal device executes the first task by using the running component.

In a possible implementation, the obtaining module is specifically configured to:
obtain device information of a plurality of terminal devices connected to the first terminal device, where the plurality of terminal devices include the second terminal device.

The apparatus further includes:
a terminal selection module, configured to: before the task running information of the first task is transferred to the second terminal device, enable selection for the second terminal device in the plurality of terminal devices.

In a possible implementation, the terminal selection module is specifically configured to:
present second selection information, where the second selection information indicates the user to perform selection from the plurality of terminal devices; and receive a second input fed back by the user based on the second selection information; and
enable selection for the second terminal device in the plurality of terminal devices based on the second input including the second terminal device.

In a possible implementation, the terminal selection module is specifically configured to:
receive the second input of the user, where the second input indicates to select the second device from the plurality of terminal devices.

In a possible implementation, the terminal selection module is specifically configured to:
present second selection information, where the second selection information indicates the user to perform selection from the plurality of terminal devices; and
receive a second input fed back by the user based on the second selection information, where the second input includes the second terminal device.

In a possible implementation, the terminal selection module is specifically configured to:
select, from the plurality of terminal devices based on the device information of the second terminal device, device information that best meets the execution requirement of the first task, and enable selection for the second terminal device in the plurality of terminal devices.

In a possible implementation, the target application task includes the first task and a second task.

The apparatus further includes:
the task execution module, configured to: when the device information of the second terminal device does not meet an execution requirement of the second task of the target application, keep execution of the second task.

In a possible implementation, the task running information related to the first task includes:
execution data and index information of the execution data, where the execution data is data required for executing the first task, the index information includes a memory address, the memory address is an address of available storage space on the second terminal device, and the index information indicates the second terminal device to store the execution data in the storage space corresponding to the memory address.

In a possible implementation, the first task is one of a UI display task, an image rendering task, a logical status update task, an AI task, or a data processing or analysis task.

According to a fourth aspect, this application provides an application running apparatus, where the apparatus is used in a target system, the target system includes a first terminal device and a second terminal device, the first terminal device is communicatively connected to the second terminal device, and the first terminal device includes:
an obtaining module, configured to: when a target application is run, obtain device information and/or a software execution environment of the second terminal device; and
a sending module, configured to: when the device information and/or the software execution environment of the second terminal device meet/meets an execution requirement of a first task of the target application, transfer task running information of the first task to the second terminal device, where the first terminal device does not execute the first task.

The second terminal device includes:
a first task execution module, configured to execute the first task based on the task running information related to the first task.

In a possible implementation, the target application further includes a second task, and the second terminal device includes:
a second task execution module, configured to: when the second terminal device executes the first task based on the task running information, keep, by the first terminal device, execution of the second task.

In a possible implementation, the first terminal device further includes:
a receiving module, configured to: before the task running information related to the first task is transferred to the second terminal device, receive a first input of a user, where the first input indicates to transfer the task running information related to the first task to the second terminal device.

In a possible implementation, the first terminal device further includes:
a presentation module, configured to present, by the first terminal device, first selection information, where the first selection information indicates at least one task of the target application, and the device information and/or the software execution environment of the second terminal device meet/meets an execution requirement of the at least one task.

The receiving module is specifically configured to:
receive a first input fed back by the user based on the first selection information, where the first input includes the first task.

In a possible implementation, the sending module is further configured to: after the task running information related to the first task is transferred to the second terminal device, transfer, by the first terminal device, status data related to the first task to the second terminal device, where the status data is status data required when the second terminal device executes the first task.

In a possible implementation, the sending module is further configured to: after the task running information related to the first task is transferred to the second terminal device, transfer, by the first terminal device, status data related to the first task to the second terminal device, where the status data is status data required when the second terminal device executes the first task.

In a possible implementation, the first terminal device and the second terminal device communicate with each other in at least one manner of near field communication, Wi-Fi, Bluetooth, ultra-wideband, ZigBee ZigBee, RFID, 4G, 5G, LoRa, SIGFOX, Z-Wave, and NB-loT.

In a possible implementation, the device information includes:
component information, where the component information indicates whether a running component of the target application is deployed on the second terminal device, and the running component is configured to have a capability of executing the first task.

The execution requirement includes:
the running component is deployed on the second terminal device.

In a possible implementation, the device information includes at least one of the following information:
power supply information, processor information, memory information, a transmission bandwidth, input device information, output device information, and a network load.

In a possible implementation, the software execution environment includes a device status of the terminal device and/or a running status of the running component.

When the device status indicates that the second terminal device is powered off or in a sleep mode, a screen-off mode, or a screen-locked mode, the task running information related to the first task includes first indication information, and the first indication information indicates at least one of the following information: The second terminal device is powered on, or the sleep mode, the screen-off mode, or the screen-locked mode ends; the second terminal device runs the running component; and the second terminal device executes the first task by using the running component.

Alternatively, when the device status indicates that the second terminal device is started, and the running status indicates that the second terminal device does not run the running component, the task running information related to the first task includes second indication information, and the second indication information indicates at least one of the following information: The second terminal device runs the running component, and the second electronic device executes the first task by using the running component.

Alternatively, when the device status indicates that the second terminal device is started, and the running status indicates that the second terminal device runs the running component, the task running information related to the first task includes third indication information, and the third indication information indicates that the second terminal device executes the first task by using the running component.

In a possible implementation, the task running information related to the first task includes:
execution data and index information of the execution data, where the execution data is data required for executing the first task, the index information includes a memory address, the memory address is an address of available storage space on the second terminal device, and the index information indicates the second terminal device to store the execution data in the storage space corresponding to the memory.

The first task execution module is specifically configured to:
store, based on the index information, the execution data in the storage space corresponding to the memory address; and
when executing the first task, obtain the execution data from the storage space corresponding to the memory address.

In a possible implementation, when the second terminal device completes execution of the first task and does not receive execution trigger of another task in the target application from the first terminal device, the second terminal device does not execute the another task of the target application.

In a possible implementation, the first task is one of a UI display task, an image rendering task, a logical status update task, an AI task, or a data processing or analysis task.

In a possible implementation, a task of the target application includes the first task and a second task, the first task and the second task are rendering tasks, the first task is used to draw a first application interface, the second task is used to draw a second application interface, and the first application interface and the second application interface are different interfaces.

The first terminal device further includes:
a second task execution module, configured to execute the second task, and trigger a display device to display the second application interface.

The first task execution module is specifically configured to:
trigger, by the second terminal device, a display device to display the first application interface.

In a possible implementation, the first task is a rendering task.

The first task execution module is specifically configured to:
execute the first task based on the task running information related to the first task and a display parameter of the display device of the second terminal device.

According to a fifth aspect, this application provides a terminal device, and the device includes a processor, a memory, and a bus.

The processor and the memory are connected through the bus.

The memory is configured to store a computer program or instructions.

The processor is configured to invoke or execute the program or the instructions stored in the memory, to implement the steps in any one of the first aspect and the possible implementations of the first aspect and the steps in any one of the second aspect and the possible implementations of the second aspect.

According to a sixth aspect, this application provides a computer storage medium, including computer instructions. When the computer instructions are run on an electronic device or a server, the steps in any one of the first aspect and the possible implementations of the first aspect and the steps in any one of the second aspect and the possible implementations of the second aspect are performed.

According to a seventh aspect, this application provides a computer program product. When the computer program product runs on an electronic device or a server, the steps in any one of the first aspect and the possible implementations of the first aspect and the steps in any one of the second aspect and the possible implementations of the second aspect are performed.

According to an eighth aspect, this application provides a chip system. The chip system includes a processor, configured to support a terminal device in implementing functions in the foregoing aspects, for example, sending or processing data or information in the foregoing methods. In a possible design, the chip system further includes a memory. The memory is configured to store necessary program instructions and data of the execution device or the training device. The chip system may include a chip, or may include a chip and another discrete component.

An embodiment of this application provides an application running method, where the method is applied to a target system, the target system includes a first terminal device and a second terminal device, the first terminal device is communicatively connected to the second terminal device, and the method includes: When running a target application, the first terminal device obtains device information of the second terminal device; when the device information of the second terminal device meets an execution requirement of a first task of the target application, the first terminal device transfers task running information of the first task to the second terminal device, and the first terminal device does not execute the first task; and the second terminal device executes the first task based on the task running information related to the first task. According to the foregoing method, on a premise that the second terminal device can execute a part of tasks of the target application, the part of tasks of the target application are transferred to the second terminal device for execution, so that a computing load of the first terminal device can be reduced.

### BRIEF DESCRIPTION OF DRAWINGS

FIG. 1 is a schematic diagram of an application architecture according to an embodiment of this application;
FIG. 2 is a schematic diagram of an application architecture according to an embodiment of this application;
FIG. 3 is a schematic diagram of a structure of a terminal device according to an embodiment of this application;
FIG. 4 is a block diagram of a software structure of a terminal device according to an embodiment of this application;
FIG. 5 is a schematic diagram of an embodiment of an application running method according to an embodiment of this application;
FIG. 6 is a schematic diagram of an interface according to an embodiment of this application;
FIG. 7 is a schematic diagram of an interface according to an embodiment of this application;
FIG. 8 is a schematic diagram of index information according to an embodiment of this application;
FIG. 9 is a schematic diagram of an embodiment of a synchronization method according to an embodiment of this application;
FIG. 10 is a schematic diagram of an embodiment of an application running method according to an embodiment of this application;
FIG. 11 is a schematic diagram of an embodiment of an application running method according to an embodiment of this application;
FIG. 12 is a schematic diagram of an embodiment of an application running apparatus according to an embodiment of this application;
FIG. 13 is a schematic diagram of an embodiment of an application running apparatus according to an embodiment of this application;
FIG. 14 is a schematic diagram of an embodiment of an application running apparatus according to an embodiment of this application;
FIG. 15 is a schematic diagram of an embodiment of an application running apparatus according to an embodiment of this application;
FIG. 16 is a schematic diagram of an embodiment of a terminal device according to an embodiment of this application; and
FIG. 17 is a schematic diagram of transferring an application task.

### DESCRIPTION OF EMBODIMENTS

The following describes embodiments of this application with reference to the accompanying drawings in embodiments of this application. Terms used in implementations of embodiments this application are merely intended to explain specific embodiments of embodiments of this application, and are not intended to limit this application.

The following describes embodiments of this application with reference to the accompanying drawings. A person of ordinary skill in the art may know that, with development of technologies and emergence of new scenarios, the technical solutions provided in embodiments of this application are also applicable to similar technical problems.

In the specification, claims, and the accompanying drawings of this application, the terms "first", "second", and the like are intended to distinguish similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "have", and any other variations thereof are intended to cover the non-exclusive inclusion, so that a process, method, system, product, or device that includes a series of units is not limited to those units, but may include other units not expressly listed or inherent to such a process, method, product, or device.

For ease of understanding embodiments of this application, an application architecture in embodiments of this application is first described herein.

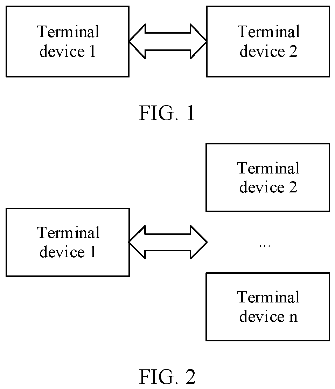

FIG. 1 is a schematic diagram of an architecture of a device networking relationship according to an embodiment of this application, where a system may include a terminal device 1 and a terminal device 2. The terminal device 1 may be connected to the terminal device 2 in a wired or wireless manner. The wireless manner includes a general packet radio service (General Packet Radio Service, GPRS) technology, a wireless local area network (Wireless Local Area Networks, WLAN), ZigBee (ZigBee), Bluetooth (Bluetooth), near field communication (Near Field Communication, NFC), and the like. It should be understood that the foregoing examples of the communication manner are merely used for description, and should not constitute a specific limitation.

The terminal device 1 and the terminal device 2 may be mobile terminals. The mobile terminal may be a smartphone, a palmtop processing device, a tablet computer, a mobile notebook computer, a virtual reality device, an integrated handheld device, or the like. The mobile terminal may alternatively be a wearable device. The wearable device may also be referred to as a wearable intelligent device, and is a general term of wearable devices that are intelligently designed and developed for daily wear by using a wearable technology, for example, glasses, gloves, a watch, clothing, and shoes. The wearable device may be a portable device that can be directly worn by a user or integrated into clothes or an accessory of a user. The wearable device can implement a powerful function through software support, data exchange, or cloud interaction. In a broad sense, wearable intelligent devices include full-featured and large-size devices that can implement complete or partial functions without depending on a smartphone, for example, a smart watch or smart glasses, and devices that focus on only one type of application function and need to work with another device like a smartphone, for example, various smart bands or smart accessories for monitoring physical signs.

The terminal device 1 and the terminal device 2 may alternatively be vehicle-mounted devices, smart conference devices, smart advertising devices, smart household appliances, or the like. The smart household appliance may be a household appliance with a sound effect device, for example, a smart television, or may be a home appliance without a sound effect device, for example, a smart projector or a smart display. This is not specifically limited herein.

In an application scenario, the terminal device 1 may be a human-computer interaction device with a small display size, and the terminal device 2 may be a device with a large display size. For example, the terminal device 1 may be a mobile phone, and the terminal device 2 may be a television or a PC. It should be understood that the foregoing example is merely used for description, and cannot constitute a specific limitation.

It should be understood that the system architecture may further include more terminals. As shown in FIG. 2, the terminal device 1 may be communicatively connected to a plurality of terminal devices. In addition, although not shown in FIG. 2, the plurality of terminal devices may also be communicatively connected.

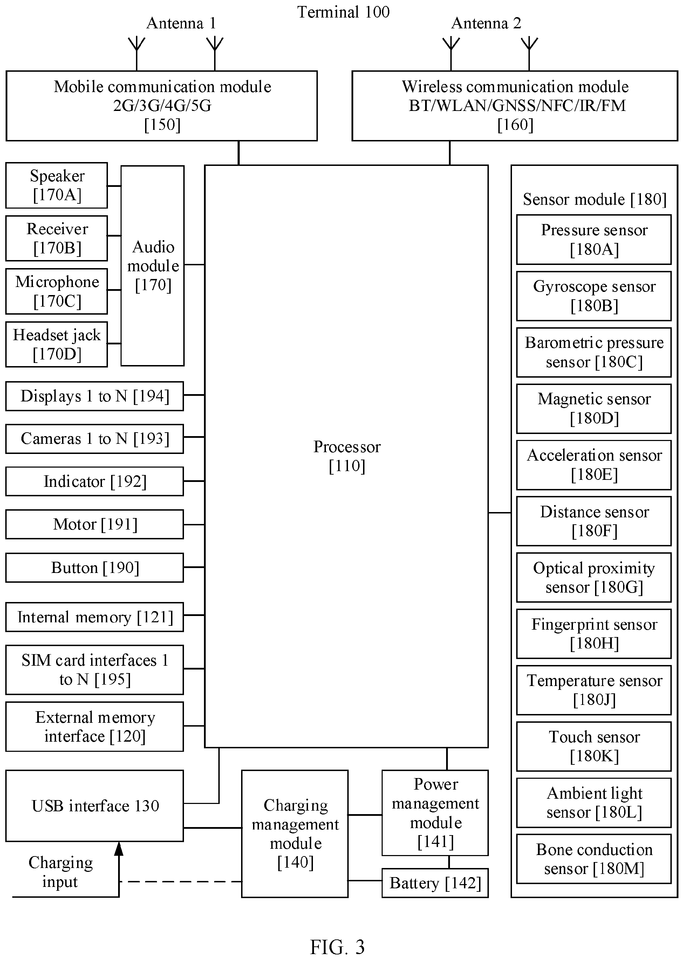

For ease of understanding, the following uses an example in which the terminal device is a mobile phone to describe a structure of the terminal device 100 provided in embodiments of this application. FIG. 3 is a schematic diagram of a structure of the terminal device according to an embodiment of this application.

As shown in FIG. 3, the terminal device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure shown in this embodiment of this application does not constitute a specific limitation on the terminal device 100. In some other embodiments of this application, the terminal device 100 may include more or fewer components than those shown in the figure, or some components may be combined, or some components may be divided, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction reading and instruction execution.

A memory may further be disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access and reduces waiting time of the processor 110. Therefore, system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the terminal device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to perform audio communication, and sample, quantize, and code an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be configured for audio communication.

The UART interface is a universal serial data bus, and is configured to perform asynchronous communication. The bus may be a two-way communication bus, and converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the terminal device 100. The processor 110 communicates with the display 194 through the DSI interface, to implement a display function of the terminal device 100.

The GPIO interface may be configured through software. The GPIO interface may be configured for control signals or data signals. In some embodiments, the GPIO interface may be configured to connect the processor 110 to the camera 193, the display 194, the wireless communication module 160, the audio module 170, the sensor module 180, and the like. The GPIO interface may alternatively be configured as an I2C interface, an I2S interface, a UART interface, a MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the terminal device 100, or may be configured to transmit data between the terminal device 100 and a peripheral device, or may be configured to connect to a headset for playing audio through the headset. Alternatively, the interface may be configured to connect to another electronic device, for example, an AR device.

It may be understood that an interface connection relationship between the modules shown in this embodiment of this application is merely an example for description, and constitutes no limitation on the structure of the terminal device 100. In some other embodiments of this application, the terminal device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input from a wired charger through the USB interface 130. In some embodiments of wireless charging, the charging management module 140 may receive a wireless charging input through a wireless charging coil of the terminal device 100. The charging management module 140 supplies power to the electronic device through the power management module 141 while charging the battery 142.

The power management module 141 is configured to connect the battery 142, the charging management module 140, and the processor 110. The power management module 141 receives an input of the battery 142 and/or an input of the charging management module 140, and supplies power to the processor 110, the internal memory 121, the display 194, the camera 193, the wireless communication module 160, and the like. The power management module 141 may further be configured to monitor parameters such as a battery capacity, a quantity of battery cycles, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the terminal device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the terminal device 100 may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used in combination with a tuning switch.

The mobile communication module 150 may provide a solution applied to the terminal device 100 for wireless communication including 2G/3G/4G/5G and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some function modules of the mobile communication module 150 may be disposed in the processor 110. In some embodiments, at least some function modules of the mobile communication module 150 and at least some modules of the processor 110 may be disposed in a same device.

The modem processor may include a modulator and a demodulator. The modulator is configured to modulate a to-be-sent low-frequency baseband signal into a medium or high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent device. In some other embodiments, the modem processor may be independent of the processor 110, and is disposed in a same device as the mobile communication module 150 or another function module.

The wireless communication module 160 may provide a wireless communication solution that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the terminal device 100. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the terminal device 100, the antenna 1 and the mobile communication module 150 are coupled, and the antenna 2 and the wireless communication module 160 are coupled, so that the terminal device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

The terminal device 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information. Specifically, the one or more GPUs in the processor 110 may implement an image rendering task.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diodes, QLED), or the like. In some embodiments, the terminal device 100 may include one or N displays 194, where N is a positive integer greater than 1.

The terminal device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as an RGB format or a YUV format. In some embodiments, the terminal device 100 may include one or N cameras 193, where N is a positive integer greater than 1.

The video codec is configured to compress or decompress a digital video. The terminal device 100 may support one or more video codecs. Therefore, the terminal device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a transfer mode between human brain neurons, and may further continuously perform self-learning. Applications such as intelligent cognition of the terminal device 100 may be implemented through the NPU, for example, image recognition, facial recognition, voice recognition, and text understanding.

The external memory interface 120 may be configured to connect to an external storage card, for example, a micro SD card, to extend a storage capability of the terminal device 100. The external storage card communicates with the processor 110 through the external memory interface 120, to implement a data storage function. For example, files such as music and videos are stored in the external storage card.

The internal memory 121 may be configured to store computer-executable program code, and the executable program code includes instructions. The internal memory 121 may include a program storage area and a data storage area. The program storage area may store an operating system, an application required by at least one function (for example, a sound playing function or an image playing function), and the like. The data storage area may store data (for example, audio data or an address book) created in a process of using the terminal device 100, and the like. In addition, the internal memory 121 may include a high-speed random access memory, and may further include a non-volatile memory, for example, at least one magnetic disk storage device, a flash storage device, or a universal flash storage (universal flash storage, UFS). The processor 110 runs the instructions stored in the internal memory 121 and/or the instructions stored in the memory disposed in the processor, to perform various function applications of the terminal device 100 and data processing.

The terminal device 100 may implement an audio function by using the audio module 170, the speaker 170A, the receiver 170B, the microphone 170C, the headset jack 170D, the application processor, and the like, for example, music playing and sound recording.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some function modules in the audio module 170 are disposed in the processor 110.

The speaker 170A, also referred to as a "loudspeaker", is configured to convert an electrical audio signal into a sound signal. The terminal device 100 may be configured to listen to music or answer a call in a hands-free mode through the speaker 170A.

The receiver 170B, also referred to as an "earpiece", is configured to convert an electrical audio signal into a sound signal. When a call is answered or voice information is received by using the terminal device 100, the receiver 170B may be put close to a human ear to receive a voice.

The microphone 170C, also referred to as a "mike" or a "mic", is configured to convert a sound signal into an electrical signal. When making a call or sending voice information, the user may make a sound near the microphone 170C through the mouth of the user, to input a sound signal to the microphone 170C. At least one microphone 170C may be disposed in the terminal device 100. In some other embodiments, two microphones 170C may be disposed in the terminal device 100, to implement a noise reduction function in addition to collecting a sound signal. In some other embodiments, three, four, or more microphones 170C may alternatively be disposed in the terminal device 100, to collect a sound signal and reduce noise. The microphones may further identify a sound source, to implement a directional recording function, and the like.

The headset jack 170D is configured to connect to a wired headset. The headset jack 170D may be a USB interface 130 or a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The terminal device 100 determines pressure intensity based on the change in the capacitance. When a touch operation is performed on the display 194, the terminal device 100 detects intensity of the touch operation through the pressure sensor 180A. The terminal device 100 may also calculate a touch position based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on a Messaging application icon, an instruction for viewing an SMS message is performed. When a touch operation whose touch operation intensity is greater than or equal to the first pressure threshold is performed on the Messaging application icon, an instruction for creating a new SMS message is performed.

The gyroscope sensor 180B may be configured to determine a motion posture of the terminal device 100. In some embodiments, an angular velocity of the terminal device 100 around three axes (namely, axes x, y, and z) may be determined by using the gyroscope sensor 180B. The gyroscope sensor 180B may be configured to implement image stabilization during photographing. For example, when the shutter is pressed, the gyroscope sensor 180B detects an angle at which the terminal device 100 jitters, calculates, based on the angle, a distance for which a lens module needs to compensate, and allows the lens to cancel the jitter of the terminal device 100 through reverse motion, to implement image stabilization. The gyroscope sensor 180B may also be used in a navigation scenario and a somatic game scenario.

The barometric pressure sensor 180C is configured to measure barometric pressure. In some embodiments, the terminal device 100 calculates an altitude by using a barometric pressure value measured by the barometric pressure sensor 180C, to assist in positioning and navigation.

The magnetic sensor 180D includes a Hall effect sensor. The terminal device 100 may detect opening and closing of a flip leather case by using the magnetic sensor 180D. In some embodiments, when the terminal device 100 is a clamshell phone, the terminal device 100 may detect opening and closing of a flip cover based on the magnetic sensor 180D. Further, a feature such as automatic unlocking upon opening of the flip cover is set based on a detected opening or closing state of the flip cover.

The acceleration sensor 180E may detect an acceleration value of the terminal device 100 in various directions (usually on three axes). When the terminal device 100 is still, a magnitude and a direction of gravity may be detected. The acceleration sensor may be further configured to identify a posture of the electronic device, and is used in an application such as switching between a landscape mode and a portrait mode or a pedometer.

The distance sensor 180F is configured to measure a distance. The terminal device 100 may measure the distance in an infrared manner or a laser manner. In some embodiments, in a photographing scenario, the terminal device 100 may measure a distance by using the distance sensor 180F, to implement quick focusing.

The optical proximity sensor 180G may include, for example, a light emitting diode (LED) and an optical detector, for example, a photodiode. The light emitting diode may be an infrared light emitting diode. The terminal device 100 emits infrared light by using the light-emitting diode. The terminal device 100 detects infrared reflected light from a nearby object by using the photodiode. When sufficient reflected light is detected, it may be determined that there is an object near the terminal device 100. When insufficient reflected light is detected, the terminal device 100 may determine that there is no object near the terminal device 100. The terminal device 100 may detect, by using the optical proximity sensor 180G, that the user holds the terminal device 100 close to an ear to make a call, to automatically perform screen-off for power saving. The optical proximity sensor 180G may also be used in a leather case mode or a pocket mode to automatically unlock or lock the screen.

The ambient light sensor 180L is configured to sense ambient light brightness. The terminal device 100 may adaptively adjust brightness of the display 194 based on the sensed ambient light brightness. The ambient light sensor 180L may also be configured to automatically adjust a white balance during photographing. The ambient light sensor 180L may further cooperate with the optical proximity sensor 180G to detect whether the terminal device 100 is in a pocket, to avoid an accidental touch.

The fingerprint sensor 180H is configured to collect a fingerprint. The terminal device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the terminal device 100 executes a temperature processing policy based on the temperature detected by the temperature sensor 180J. For example, when the temperature reported by the temperature sensor 180J exceeds a threshold, the terminal device 100 lowers performance of a processor near the temperature sensor 180J, to reduce power consumption and implement thermal protection. In some other embodiments, when the temperature is less than another threshold, the terminal device 100 heats the battery 142 to prevent the terminal device 100 from being shut down abnormally due to a low temperature. In some other embodiments, when the temperature is less than still another threshold, the terminal device 100 boosts an output voltage of the battery 142 to avoid abnormal shutdown due to a low temperature.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided on the display 194. In some other embodiments, the touch sensor 180K may alternatively be disposed on a surface of the terminal device 100 at a position different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may alternatively be disposed in the headset to form a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button or a touch button. The terminal device 100 may receive a button input, and generate a button signal input related to user setting and function control of the terminal device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. The touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the terminal device 100. The terminal device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or of different types. The SIM card interface 195 may also be compatible with different types of SIM cards. The SIM card interface 195 may also be compatible with an external storage card. The terminal device 100 interacts with a network by using the SIM card, to implement functions such as conversation and data communication. In some embodiments, an eSIM, namely, an embedded SIM card, is used for the terminal device 100. The eSIM card may be embedded into the terminal device 100, and cannot be separated from the terminal device 100.

A layered architecture, an event-driven architecture, a microkernel architecture, a microservice architecture, or a cloud architecture may be used for a software system of the terminal device 100. In this embodiment of this application, an Android system with a layered architecture is used as an example to illustrate a software structure of the terminal device 100.

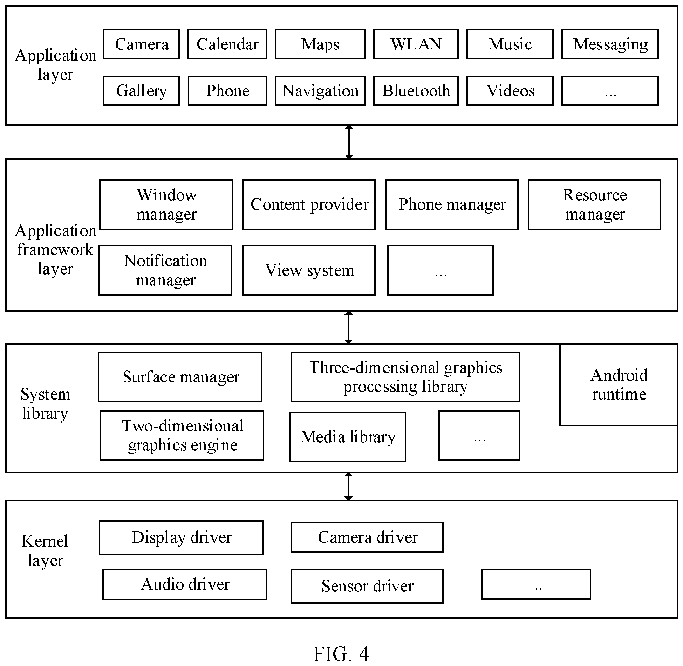

FIG. 4 is a block diagram of the software structure of the terminal device 100 according to an embodiment of this disclosure.

In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 4, the application packages may include applications such as Camera, Gallery, Calendar, Phone, Maps, Navigation, WLAN, Bluetooth, Music, Videos, and Messaging.

The application framework layer provides an application programming interface (application programming interface, API) and a programming framework for an application at the application layer. The application framework layer includes some predefined functions.

As shown in FIG. 4, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to store and obtain data, and enable the data to be accessed by an application. The data may include a video, an image, audio, calls that are made and received, a browsing history and bookmarks, an address book, and the like.

The view system includes visual controls such as a control for displaying a text and a control for displaying an image. The view system may be used to construct an application. A display interface may include one or more views. For example, a display interface including a notification icon of Messaging may include a text display view and a picture display view.

The phone manager is configured to provide a communication function of the terminal device 100, for example, manage a call status (including answering, disconnecting, and the like).

The resource manager provides various resources such as a localized string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, provide a message notification, and the like. The notification manager may alternatively be a notification that appears in a top status bar of the system in a form of a graph or a scroll bar text, for example, a notification of an application running on the background or a notification that appears on a screen in a form of a dialog window. For example, text information is displayed in the status bar, an announcement is given, the electronic device vibrates, or the indicator light blinks.

The Android runtime includes a kernel library and a virtual machine. The Android runtime is responsible for scheduling and management of the Android system.

The kernel library includes two parts: a function that needs to be invoked by a Java language and a kernel library of Android.

The application layer and the application framework layer run on the virtual machine. The virtual machine executes Java files of the application layer and the application framework layer as binary files. The virtual machine is configured to perform functions such as object lifecycle management, stack management, thread management, security and exception management, and garbage collection.

The system library may include a plurality of function modules, for example, a surface manager (surface manager), a media library (Media Libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

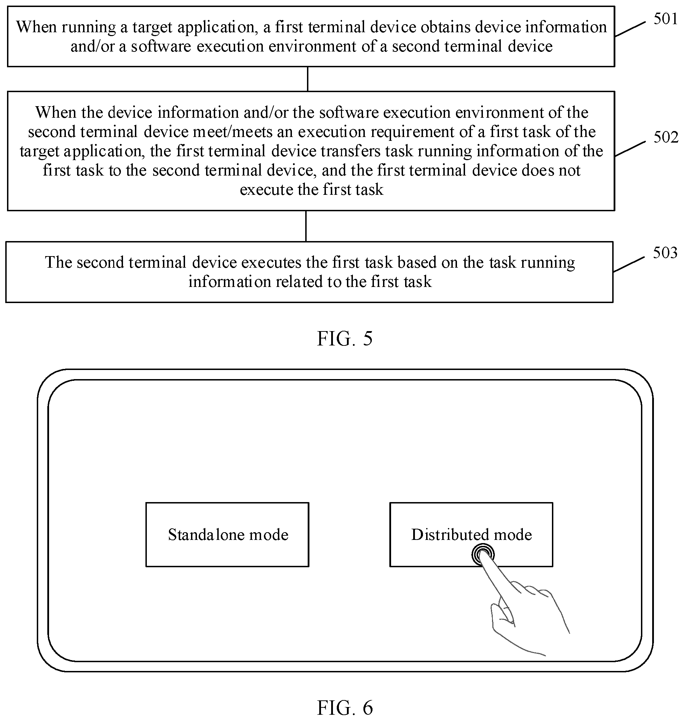

FIG. 5 is a schematic flowchart of an application running method according to an embodiment of this application. The method is applied to a target system, the target system includes a first terminal device and a second terminal device, and the first terminal device is communicatively connected to the second terminal device. As shown in FIG. 5, the application running method provided in this embodiment of this application includes the following steps.

501: When running a target application, the first terminal device obtains device information and/or a software execution environment of the second terminal device.

In this embodiment of this application, a user may run the target application on the first terminal device. The target application may be a game application, an application having a dialog function, a data analysis application, an audio and video playing application, or the like. In a possible implementation, the target application is an application with high computing power overheads and storage overheads.

In a possible implementation, because the first terminal device is limited by a CPU core frequency, a GPU core frequency, and the like, a computing capability of the first terminal device is limited. Consequently, when the first terminal device runs the target application, computing resource occupation of the first terminal device is excessively high. When the first terminal device runs the target application, to reduce a resource load, a part of computing tasks of the target application may be transferred to another terminal device for execution.

In a possible implementation, when running the target application, the first terminal device may present an option for selection by the user, to determine whether the user needs or allows the first terminal device to transfer a part of computing tasks of the target application to another terminal device.

For example, as shown in FIG. 6, after the user opens the target application on the first terminal device, the first terminal device may display an interface shown in the figure. The interface may include two options (a "standalone mode" option and a "distributed mode" option). The user may determine, by performing selection on the interface, whether to enter a standalone mode or a distributed mode. If the user selects the standalone mode, the first terminal device may run the target application, and does not transfer a part of computing tasks of the target application to another terminal device. If the user selects the distributed mode, the first terminal device may run the target application, and transfer a part of computing tasks of the target application to another terminal device.

The following describes how to select a terminal device that can be used as a task transfer object.

In a possible implementation, the first terminal device may obtain terminal devices that have a communication connection to the first terminal device, and select, from the terminal devices that have the communication connection, a terminal device that can be used as the task transfer object.

The communication connection may be communication in at least one manner of an Internet network, Wi-Fi, Bluetooth, ultra-wideband, ZigBee ZigBee, (radio frequency identification, RFID), 4G, 5G, LoRa, SIGFOX, Z-Wave, and NB-loT. For example, the first terminal device and the second terminal device are connected in a plurality of manners of near field communication, Wi-Fi, Bluetooth, the ultra-wideband, ZigBee ZigBee, RFID, 4G, 5G, LoRa, SIGFOX, Z-Wave, and NB-loT.

It should be understood that the first terminal device and the second terminal device may alternatively be connected in another wireless connection manner with a low delay (for example, 3GPP, non-3GPP, or a connection manner implemented based on a short-range technology). This is not limited herein.

For example, the first terminal device may be a mobile phone, and the second terminal device may be a PC. The phone and a desktop interact with each other in a wireless manner, for example, in a form of Wi-Fi Direct or a Wi-Fi hotspot, and the desktop and a monitor are connected by using a dedicated cable, for example, a GMSL. Running a part of tasks of a game of the mobile phone on the desktop in a distributed manner can bring large-screen immersive experience. In addition, heavy-load rendering is run on the desktop to enable some game applications that cannot run smoothly (a low frame rate or frame freezing) on the phone to run smoothly, to bring better game experience. A feature of the method further lies in that two devices can independently run different parts of an application at the same time. Therefore, a usage method of the application is also extended. The method is a true distributed application form, and is essentially different from several current distributed applications. The current distributed applications may be classified into three types: A first type is a Mapreduce-type distributed multi-task framework. This type of framework is mainly applied to a homogeneous system, especially a server cluster, is used for concurrent execution of a plurality of tasks, and is essentially different from dynamic splitting of an application task in this example. In addition, task execution and synchronization in a heterogeneous environment are not considered. Therefore, an ultimate objective, namely, sharing load pressure of the first device, of this example cannot be implemented. A second type is image streaming computing, and a main technical point of the second type is to split an image task to the second terminal device, and then return an image to the first device for display. In this process, a part of computing power can be transferred, but an applicable scenario is limited. Especially, image data has a large data amount, and cannot support a highly real-time application scenario. However, in this example, a communication bottleneck problem existing after splitting can be handled. A third type is a cloud game application. For this type of application, an image is rendered on a cloud and transferred back to a local host. In this way, a part of computing power is transferred. Compared with the previous type, this type of application has poor real-time support and does not have a capability of splitting an application task. Only simple image task rendering and back transferring are performed.

The following describes how to select, from the terminal devices that have the communication connection, a terminal device that can be used as the task transfer object.

In a possible implementation, the first terminal device may obtain device information of a terminal device that has a communication connection, determine, based on analysis of the device information, whether the terminal device has a capability of running a to-be-transferred task, and determine a part of tasks to be transferred to the terminal device.

For example, the transfer object is the first task. In a possible implementation, the device information and/or application information may include a current device running status and possible application running status information of the second terminal device. This type of information also needs to be selectively synchronized after transfer is completed, and in this phase, the information may be referred to as application runtime information, that is, includes the device information, existing application information, and transferred application running information.

The first task may be one of a UI display task, an image rendering task, a logical status update task, an AI task, or a data processing or analysis task. An AI engine may be configured to execute an AI task, a rendering engine may be configured to execute a rendering task, and a logical engine and a physical engine may be configured to execute a logical status update task. If a running component having a capability of executing the first task is not deployed on the second terminal device, the first task does not need to be transferred to the second terminal device for execution.

A game application is used as an example. The running component may include a logical status update engine, a physical engine, an AI engine, a rendering engine, and the like. The logical status update engine and the physical engine may be referred to as a simulation engine. The simulation engine may execute game logic and control execution of game setting simulation. The rendering engine may be referred to as a presentation engine, and the presentation engine may control execution of rendering of a game setting frame and outputting of presentation of the frame. The simulation engine may read game rules and generate a game status based on inputs received from one or more users. The simulation engine may control execution of individual objects (such as a virtual component, a virtual effect, and/or a virtual role) in the game application. The simulation engine may manage and determine a role movement, a role status, and collision detection, and may obtain an expected motion of a role based on a collision. The simulation engine receives a user input and determines role events, such as an action, a collision, running, throwing, an attack, and another event suitable for the game. The role event may be controlled by a role movement rule, and the role movement rule determines an appropriate motion that the role needs to make in response to the event. The simulation engine may include a physical engine that can determine a new posture of a role. The physical engine may use the following items as an input of the physical engine: skeleton models of various roles, an environment setting, a role status like a current posture (for example, expressed as a position, a joint angle, or a position of a body part of another specification) and a body part and a motion speed (a linear velocity and/or an angular velocity) provided by a role movement module, where these may be in a form of a set of force/torque vectors of some or all body parts. Based on this information, the physical engine uses a physical rule to generate new postures for the role, and these new postures may be used to update the role status. The simulation engine provides a user input based on a defined game rule, to control all aspects of the game application. Embodiments of the game rule include a scoring rule, a possible input, an action/event, a movement in response to the input, or the like. Another component may control what input is received, how the game goes on, and another aspect of the game settings.

The simulation engine may output graphical status data, and the graphical status data is used by the presentation engine to generate and render a frame in the game application. Each virtual object may be configured as a status flow process processed by the simulation engine. The graphical status data used by the presentation engine may be generated in each status flow process. For example, the status flow process may include various virtual objects, such as a transmitter, a light, a model, an occluder (occluder), terrain, a visual environment, and another virtual object that affects the game status together with the game application. Execution of the simulation engine is further described in detail herein.

The presentation engine may generate and render, for output to a display, a frame in the game application by using the graphical status data. The presentation engine may combine virtual objects, such as virtual roles, animated objects, non-animated objects, background objects, lighting, reflections, and the like, to generate a complete scene and a new frame for display. The presentation engine considers a surface, a color texture, and another parameter in the rendering process. The presentation engine may combine the virtual objects (such as lighting, virtual role images, non-animated objects, and background objects in a virtual environment), to generate and render a frame. Execution of the presentation engine is further described in detail herein.

In a possible implementation, the target application may be split into a plurality of tasks. The game application is used as an example. The game application may be dynamically split into two tasks: a game logic status update task and a rendering task. Device requirements of the game logic update task may be: a CPU device, a CPU dominant frequency of 2.1 GHz or higher, a memory of 2 GB or higher, an Android system or a Windows system, an audio input and output, a touchscreen input, and a sending bandwidth of 50 Mbit/s or higher. The rendering task requires a CPU device, a CPU dominant frequency of 2.1 GHz or higher, a GPU device, a display device of 1080p or higher, and a receiving bandwidth of 60 Hz or higher.

For example, the transfer object is the first task. In a possible implementation, the device information may include power supply information. The power supply information may be available power and a charging mode (for example, an active input or battery power supply) of the second terminal device. For example, when the power supply information indicates that the available power of the second terminal device is small, it may be determined that the first task does not need to be transferred to the second terminal device for execution.

For example, the transfer object is the first task. In a possible implementation, the device information may include processor information. A processor may be a CPU, a GPU, a TPU, an NPU, or the like. The processor information may be but is not limited to a CPU model/dominant frequency, a GPU model/dominant frequency, a current CPU/GPU load, or the like. Because some tasks have specific requirements for a type, a processing capability, and a currently available resource of a processor, when a task requirement is not met, it may be determined that the first task does not need to be transferred to the second terminal device for execution.

For example, the transfer object is the first task. In a possible implementation, the device information may include memory information, for example, a memory size. When a requirement of the first task for a memory size is not met, it may be determined that the first task does not need to be transferred to the second terminal device for execution.

For example, the transfer object is the first task. In a possible implementation, the device information may include a transmission bandwidth, and the transmission bandwidth may be an available bandwidth of a current network. In some implementations, to ensure synchronization of task execution, it needs to be ensured that there is no delay (or a very small delay) when the first task is transmitted to the second terminal device, and it needs to be ensured that a transmission bandwidth between the first terminal device and the second terminal device meets a requirement corresponding to the first task. When the requirement is not met, it may be determined that the first task does not need to be transferred to the second terminal device for execution.

For example, the transfer object is the first task. In a possible implementation, the device information may include input device information. The input device information may include an input device type. An input device may be an audio input, a mouse input, a keyboard input, or the like. In some tasks, for example, a task involving interaction with the user, the first task further needs to support an input of the user. However, because the first task is transferred to the second terminal device for execution, the second terminal device needs to have the input device type required by the first task. When the requirement is not met, it may be determined that the first task does not need to be transferred to the second terminal device for execution.

For example, the transfer object is the first task. In a possible implementation, the device information may include output device information. The output device information may include an output device type. An output device may be an audio output, an image/video output, or the like. The output device information may further be a display attribute of a display device, for example, a screen resolution and a refresh rate. In some tasks, for example, a task involving interaction with the user, the first task further needs to support an output (for example, a rendering task requires that a display device exists and has a parameter requirement of the display device). Because the first task is transferred to the second terminal device for execution, the second terminal device needs to have the output device type and an attribute of the output device that are required by the first task. When the requirement is not met, it may be determined that the first task does not need to be transferred to the second terminal device for execution.

For example, the transfer object is the first task. In a possible implementation, the device information may include network load information. The network load information may include a working status of a network interface card of the current device, a network bandwidth usage, end-to-end delay time, and the like. Because some tasks have specific requirements for a network processing capability and a currently available network resource, when a task transfer requirement is not met, it may be determined that the first task does not need to be transferred to the second terminal device for execution. Alternatively, when a network load of the current device is high, and the second terminal device has sufficient network resources, it may be determined that task transfer is immediately performed.

In a possible implementation, the first terminal device may initiate a request for obtaining the device information to the second terminal device. For example, the first terminal device is a mobile phone. A processor of the mobile phone initiates a request for obtaining a device specification and status information through an information collection module, to obtain a connected device (for example, a PC). The PC returns device information. The device information may include [CPU model/dominant frequency, GPU model/dominant frequency, memory size, screen resolution/refresh rate, input device type, audio output, network interface/capability, whether to connect to the Internet, battery level, current CPU/GPU load, current network available bandwidth, current remaining memory]. For example, the information returned by the PC may be [Inteli711260/3.2 GHz, GTX3060, 16 GB, 4K/120, [audio input, mouse input, keyboard input], audio output, WI-FI 802.11ax, connected to the Internet, active, CPU load 30%/GPU load 5%, current network available bandwidth 200 Mbps, and current remaining memory 14 GB], and device information returned by the mobile phone may be [ARMv8/2.6 GHz, Mali65, 4 GB, 1080P/60 Hz, [audio input, touchscreen input], audio output, WI-FI 802.11ax, connected to the Internet, 80% battery level, CPU load 20%/GPU load 5%, current network available bandwidth 200 Mbps, and current remaining memory 3 GB]. Version and status information of an application (namely, the game in this embodiment) of the local device and the connected device is obtained. The PC returns program information [whether a program exists, program version number, and whether the program is running currently] .

In a possible implementation, if the first terminal device determines a plurality of terminal devices that meet the requirement, a part of (or all) the terminal devices may be selected from the plurality of terminal devices as transfer objects of the first task.

In a possible implementation, device information of a plurality of terminal devices connected to the first terminal device may be obtained, where the plurality of terminal devices include the second terminal device; and selection for the second terminal device in the plurality of terminal devices is enabled.

In a possible implementation, second selection information may be presented, where the second selection information indicates the user to perform selection from the plurality of terminal devices; a second input fed back by the user based on the second selection information is received; and selection for the second terminal device in the plurality of terminal devices is enabled based on the second input including the second terminal device.

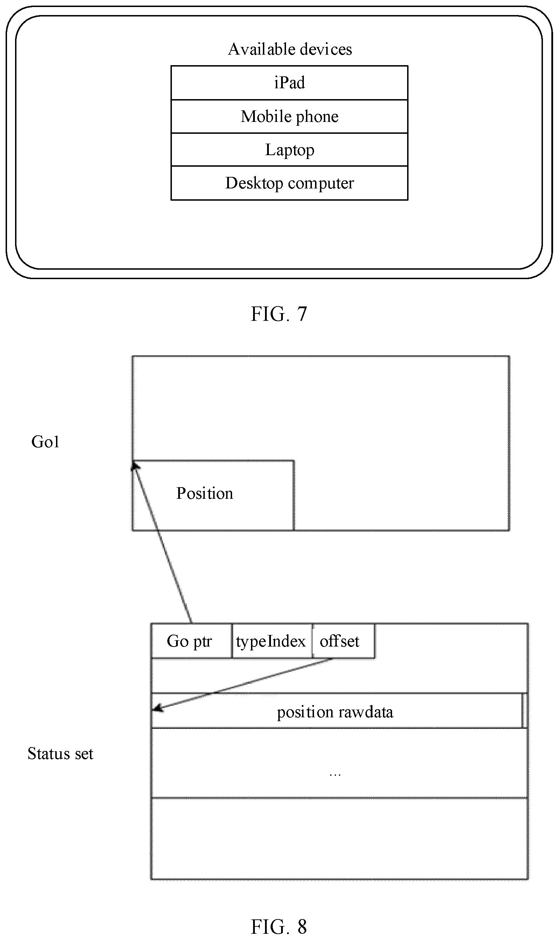

FIG. 7 is a schematic diagram of a presentation manner of the second selection information. FIG. 7 shows a display interface of the first terminal device, where options of a plurality of terminal devices may be included. The user may select a transfer object of the first task from the options of the plurality of terminal devices.

In a possible implementation, the first terminal device may further select, from the plurality of terminal devices based on the device information of the second terminal device, device information that best meets the execution requirement of the first task, and enable selection for the second terminal device in the plurality of terminal devices. Best meeting the execution requirement may be understood as selecting a terminal device with optimal performance from terminal devices that meet the execution requirement of the first task.

For example, the target application is a game application, the first terminal device is a mobile phone, and the second terminal device is a PC. The first terminal device may perform matching with a device list based on a requirement of a logical status update task and a rendering and display task, and output an optimal scheduling result. A KM matching algorithm is used to find the best match. For example, the rendering and display task requires a higher screen resolution, a higher refresh rate, a higher GPU specification, and the PC in peripheral devices has a higher GPU specification, a higher screen resolution, and a higher refresh rate. In addition, the game logic update task requires a touchscreen input, which can be met only by the mobile phones. Therefore, an optimal task scheduling result in this case is that the logic update task is scheduled locally on the mobile phone, and the rendering task is scheduled on the PC.

According to the foregoing method, the first terminal device may determine the second terminal device as a transfer object of the first task. It should be understood that, in addition to the second terminal device, the first terminal device may further determine another terminal device as a transfer object of the first task. This is not limited herein.

502: When the device information of the second terminal device meets the execution requirement of the first task of the target application, the first terminal device transfers task running information of the first task to the second terminal device, and the first terminal device does not execute the first task.

In this embodiment of this application, when transferring the first task, the first terminal device needs to transfer data (or referred to as the task running information) related to execution of the first task to the second terminal device.

In a possible implementation, the device information and/or the application information may further include a device status of the terminal device and/or a running status of the running component. When the device status indicates that the second terminal device is not started, the task running information related to the first task includes first indication information, and the first indication information is used to trigger starting of the second terminal device, and indicates that the second terminal device runs the running component and executes the first task by using the running component. Alternatively, when the device status indicates that the second terminal device is started, and the running status indicates that the second terminal device does not run the running component, the task running information related to the first task includes second indication information, and the second indication information indicates that the second terminal device runs the running component and executes the first task by using the running component. Alternatively, when the device status indicates that the second terminal device is started, and the running status indicates that the second terminal device runs the running component, the task running information related to the first task includes third indication information, and the third indication information indicates that the second terminal device executes the first task by using the running component.

The game application is used as an example. In a possible implementation, the task running information may include a task list and a startup parameter of a distributed game, for example, game.exe-task render (and other rendering-related information), and is sent to the second terminal device through a network, and the task is started. The first terminal device may locally start the game, and start the game logic status update task.

In some possible implementations, the task running information may include execution data.

The game application is used as an example. The execution data may include game data, game status data, and the like.

The game data may include a game rule, a pre-recorded motion capture posture/path, an environment setting, an environment object, a constraint, a skeleton model, route information, and/or other game application information. At least a part of the game data may be stored in an application data memory. In some implementations, a part of the game data may be remotely received and/or stored, for example, in a data memory. In such an implementation, the game data may be received during runtime of the game application.

The game status data may include a game status, a role status, an environment status, scenario object storage, route information, and/or other information associated with a running time status of the game application. For example, the game status data may be used to identify a status of the game application at a specific time point, such as a role position, a role orientation, a role action, a game level attribute, and other information that contributes to the status of the game application. The game status data may include simulated status data and graphical status data. The simulation status data includes game status data used by the simulation engine to perform simulations of the game application. The graphical status data includes game status data generated based on the simulated status data and used by the rendering engine to generate and render a frame for output, for example, output to a display of a user computing system.

The first terminal device may be responsible for a logical task (which may be referred to as a second task) in the game application. The logical task is mainly for processing logic of the game application, for example, processing a game input and moving a position of a corresponding game object. In addition, a status set (namely, the task running information of the first task) is generated based on the logical task. The first terminal device may synchronize the status set to the second terminal device by using a synchronization module of the first terminal device. The status set may be a logical entity; or may be a physical entity, where real data is stored in distributed specific objects; or may be a segment of continuous storage space in which specific status data is stored. The status data may include information such as a position, a rotation, and an animation status. In this embodiment, a status set of a physical entity is mainly described. A main advantage of using the physical entity is as follows: The physical entity only needs to interact with the status set. For a logical entity, a specific position of a status needs to be sensed (usually in a logical task module), and interaction with application logic is required. In this way, coupling between the synchronization module and the application is reduced, and the synchronization module becomes a universal independent module.

The synchronization module may synchronize a physical entity without sensing a specific status. In this case, serialization and deserialization operations may be reduced in a synchronization process, a series of statuses are synchronized at a time, and serialization and deserialization do not need to be performed on each status separately. In a complex game scenario, there may be thousands of statuses. In this way, a large quantity of overheads can be saved. This requires the physical entity to be designed to cross heterogeneous devices.

In the game application, to ensure normal running of the application, real-time data synchronization between the first terminal device and the second terminal device needs to be ensured, and a synchronization frequency needs to be very high. For example, status synchronization needs to be performed once for each frame of data. For a 60 fps game, a synchronization operation needs to be performed once every 16 ms. Therefore, a synchronization delay requirement is very high. In an existing implementation, when the first terminal device and the second terminal device are heterogeneous devices, the first terminal device needs to serialize to-be-sent data to obtain binary data, and transfer the binary data to the second terminal device. The second terminal device needs to deserialize the binary data to obtain data that can be identified by the second terminal device. The serialization and deserialization operations cause a specific delay, which is not allowed in a scenario that requires high synchronization, for example, a game.

In this embodiment of this application, the task running information related to the first task may include execution data and index information of the execution data, where the execution data is data required for executing the first task, the index information includes a memory address, the memory address is an address of available storage space on the second terminal device, and the index information indicates the second terminal device to store the execution data in the storage space corresponding to the memory address.

To be specific, the available storage space on the second terminal device may be first obtained, and the task running information and the address of the storage space selected by the first terminal device are transferred to the second terminal device. The second terminal device may store, based on the index information, the execution data in the storage space corresponding to the memory address, and when executing the first task, obtain the execution data from the storage space corresponding to the memory address. Because a task component on the second terminal device may directly execute the first task, format conversion does not need to be performed on the execution data, and the serialization and deserialization operations are not required, so that a processing delay is reduced.

For example, a status set layout module is shown in FIG. 8, where an index area stores a series of index information, which may include: a synchronization object pointer, a pointer of a specific physical synchronization object in the game logic, and a real synchronization object may be obtained by using the pointer. A type index indicates a type of the pointer. Specific type information is static, and is globally synchronized when being deployed on the first terminal device and the second terminal device. An offset indicates an offset of the synchronization object in the status set.

Based on this status set layout, for example, the first terminal device is a mobile phone and the second terminal device is a desktop, main steps of a synchronization process of the phone end are as follows: At an initial stage of the game, when a Go1 object is generated, the Go1 object has an attribute that needs to be synchronized (which may be identified by using an annotation or the like), and applies to the synchronization module for status set synchronization information, including index information {position pointer, postion type index, 0 (offset in the status set)}, and specific space for storing postion rawdata. The information is synchronized to the peer end. The game logic is executed, and the object position information is modified during execution of the game logic. The synchronization module performs execution. The synchronization module collects synchronization information and sequentially performs the following processing on the index information: obtaining a specific type based on the type index; converting the pointer to a pointer of this type and storing content pointed by the pointer to the position rawdata, where A layout of a memory of the position rawdata may be directly copied from a raw position, or another form may be used to avoid layouts of different devices, to implement compatibility with a heterogeneous device; and directly encapsulating the rawdata part and sending the data to the peer end. Correspondingly, main steps of a synchronization process of the desktop end may include: The synchronization module performs receiving, to obtain the status data of the peer end. The synchronization module overwrites a rawdata part of a local status set with the status data. The synchronization module performs a status synchronization operation, and sequentially performs the following processing on the index information: obtaining a specific type based on the type index, converting the pointer into a pointer of this type, and updating rawdata data corresponding to an offset to specific content pointed by the pointer. When the rendering module refreshes the game object GO, the position information of the game object is updated, and the GO is displayed at a corresponding position.

503: The second terminal device executes the first task based on the task running information related to the first task.

When the second terminal device completes execution of the first task and does not receive execution trigger of another task in the target application from the first terminal device, the second terminal device does not execute the another task of the target application. In this embodiment of this application, a lockstep lockstep synchronization mechanism based on a heterogeneous memory arrangement is used, a unified status synchronization data interface is designed, and data addresses of different platforms are packaged and notified to a peer end in sequence (for example, if a plurality of terminal devices are connected to the first terminal device, the first terminal device may transfer the task running information to different terminal devices in a preset sequence). In addition, a strictly limited synchronization method is performed in a lockstep manner (as a terminal device that receives the task running information, the terminal device does not perform other processing related to the target application than the received task running information).

A rendering task is used as an example. In a possible implementation, the second terminal device may execute the first task based on the task running information related to the first task and a display parameter (for example, a resolution or a screen refresh rate of the display device) of the display device of the second terminal device.

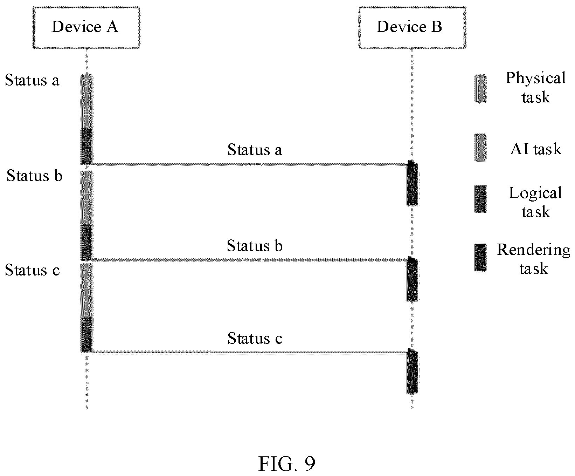

For example, refer to FIG. 9. A flowchart of a status synchronization time sequence may be shown in FIG. 9, and may include the following steps.

After a device A executes a physical task, an AI task, and a logical task, the game status is correspondingly modified to obtain a status a.

A synchronization module of the device A synchronizes the status a to a synchronization module of a device B. This step specifically participates in subsequent embodiments.

The device B directly performs a rendering task by using the status a, and transfers an image to the display device.

The device B completes the rendering task, does not perform another operation, and waits for a next status of the device A.

In a possible implementation, a task of the target application includes the first task and a second task, the first task and the second task are rendering tasks, the first task is used to draw a first application interface, the second task is used to draw a second application interface, and the first application interface and the second application interface are different interfaces. The first terminal device may execute the second task, and trigger a display device to display the second application interface. The second terminal device may trigger a display device to display the first application interface. It is equivalent to that content originally displayed on a same display may be split into content on a plurality of interfaces, and rendering and displaying are performed on different terminal devices.

For example, a main interface of the game can be transferred a large screen for display, a small map is displayed on a pad end, a task interface is displayed on a laptop, and a control interface is displayed on a mobile phone. In this way, a multi-screen and multi-view display mode can be implemented, bringing better game application experience to consumers.

In a possible implementation, after executing the first task, the second terminal device may further feed back an execution result to the first terminal device.

The game application is used as an example. In a game process, step 501 to step 503 may be performed periodically (for example, every 1s) to re-obtain device information, check whether optimal scheduling changes, and perform re-scheduling if the optimal scheduling changes. For example, when the mobile phone (the first terminal device) leaves the PC (the second terminal device), the network between the mobile phone and the PC deteriorates and the bandwidth cannot meet the requirement, or there is no network connection. In this case, in step 4, when the device information of the PC is obtained, an available bandwidth is 10 Mbps, or the device information of the PC cannot be obtained. In step 5 and step 6, the PC end cannot meet the rendering task requirement, and a scheduling algorithm schedules the two tasks back to the mobile phone. In this case, the mobile phone simultaneously performs logical status update and rendering display, and returns to the standalone game mode. When the mobile phone is close to the PC, the PC can meet the rendering task requirement again, a prompt is given to the user to indicate whether to enter the distributed mode, and task scheduling is performed again, to enter the distributed mode.

An embodiment of this application provides an application running method, where the method is applied to a target system, the target system includes a first terminal device and a second terminal device, the first terminal device is communicatively connected to the second terminal device, and the method includes: When running a target application, the first terminal device obtains device information of the second terminal device; when the device information of the second terminal device meets an execution requirement of a first task of the target application, the first terminal device transfers task running information of the first task to the second terminal device, and the first terminal device does not execute the first task; and the second terminal device executes the first task based on the task running information related to the first task. According to the foregoing method, on a premise that the second terminal device can execute a part of tasks of the target application, the part of tasks of the target application are transferred to the second terminal device for execution, so that a computing load of the first terminal device can be reduced.

Refer to Table 1. Table 1 shows comparison between power consumption and performance test effects of the mobile phone in standalone and distributed versions.

**Table 1**

| Game application | Standalone version | Distributed version |
|---|---|---|
| Resolution | 1080P | 4K |
| Frame rate | 38.6 fps | 68.8 fps |
| Peak temperature | 45.7°C | 38.3°C |

The foregoing table shows an effect of embodiments of this application in a distributed environment. It can be learned that a single-end game breaks through a performance bottleneck upper limit, and improves a display resolution and a real-time frame rate. In addition, the peak temperature decreases, indicating that this technology can effectively reduce a single-end CPU load and energy consumption.

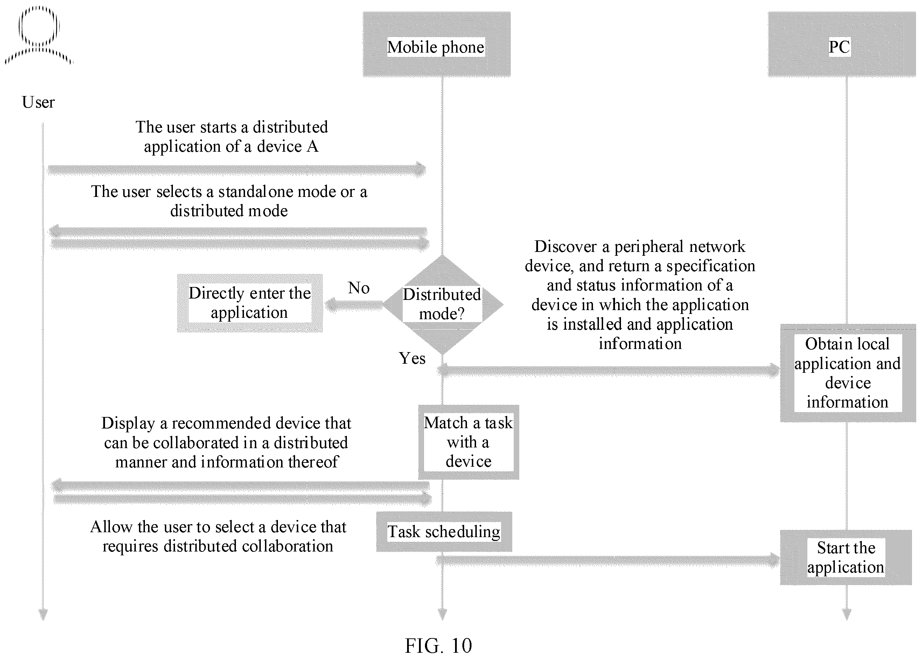

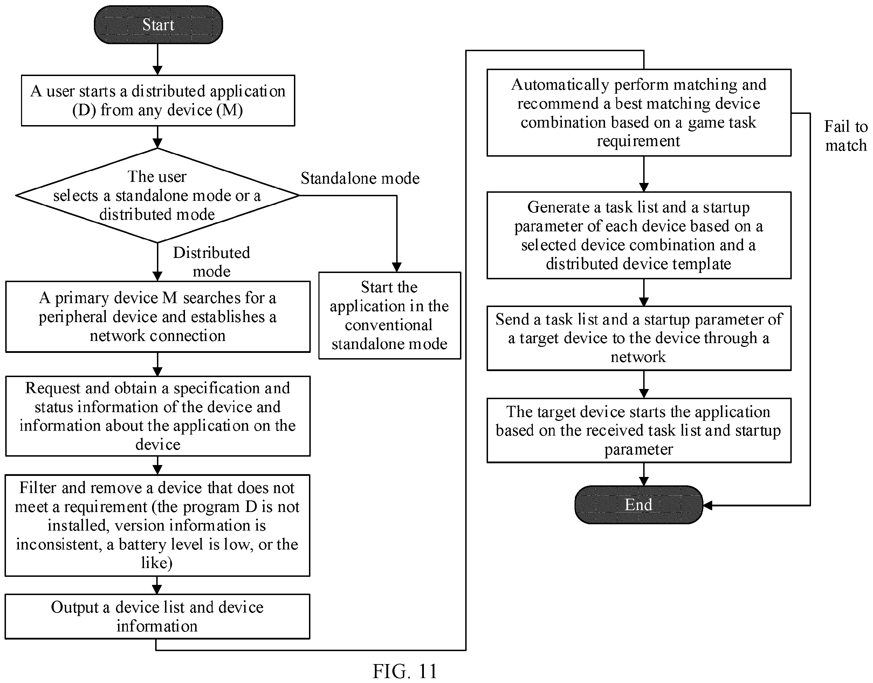

Refer to FIG. 10 and FIG. 11. FIG. 10 and FIG. 11 describe a procedure of the application running method provided in embodiments of this application by using a game application as an example.

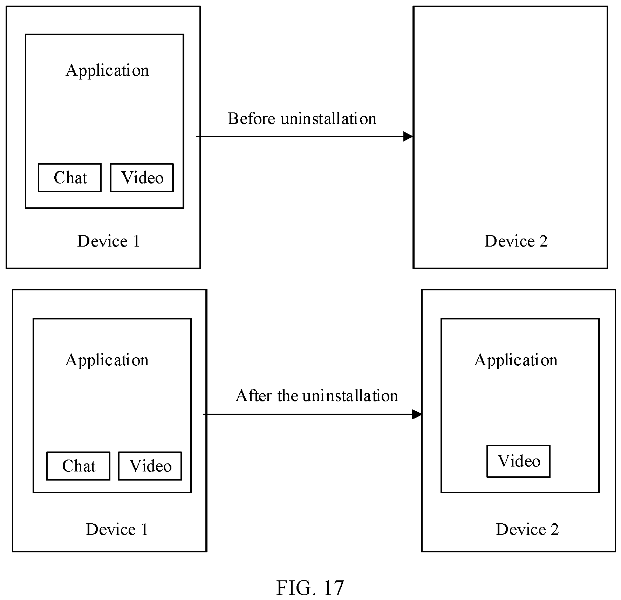

Another simple application having chat and video functions is used as an example for description. As shown in FIG. 17, in a phase before transfer, when running the application, generally, a left device can interact with the user on only one function. A possible case is that the user currently uses the chat function, and the video function is either in a disabled state or is implemented according to a current general implementation. To be specific, to enable the two functions to be used at the same time, the video function can only be displayed in a small window mode in the foreground. After it is confirmed that the peer device has a transfer condition, the video function can be run in an application on the right. If the video function of the left device is run in the small window mode, the video function may be seamlessly switched to a running video function on the right, and exit the small window mode. In this way, the user can implement the chat function and the video function on the two devices in parallel, without being limited by a single device.

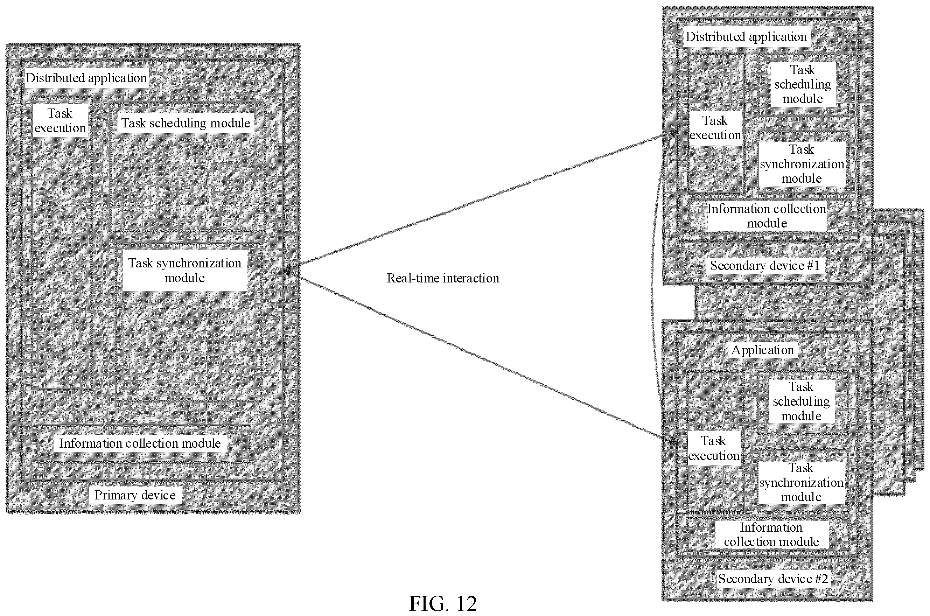

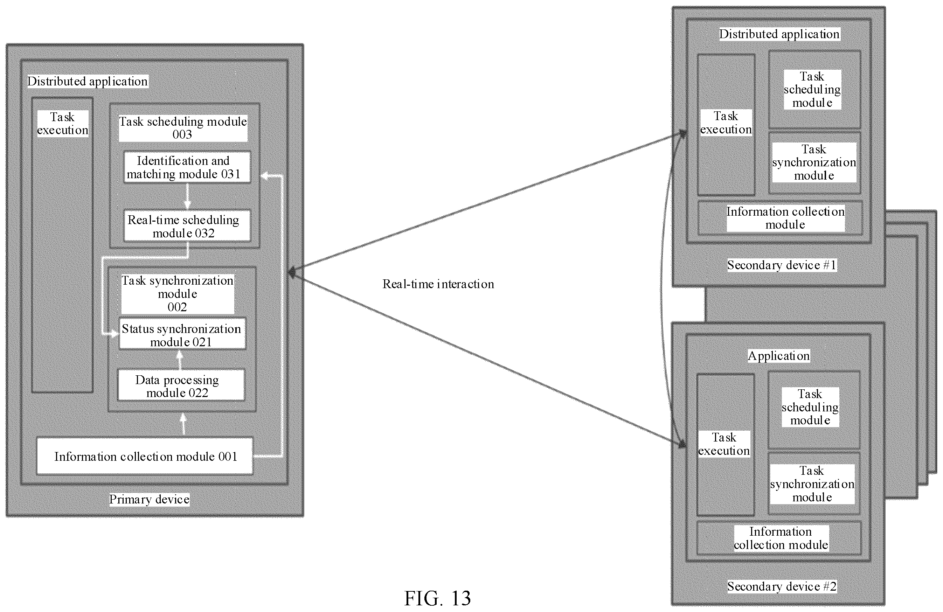

The following describes, with reference to software module, an application running apparatus provided in embodiments of this application. Basic modules of the application running apparatus may include modules such as a rule information collection module, a task scheduling module, a task synchronization module, and a task execution module. The information collection module is responsible for collecting a status of a distributed device, and an execution site and status of a distributed application. The task scheduling module is responsible for determining specific measures, task splitting policies, and scheduling objects of task scheduling based on collected information. The task synchronization module is a module that ensures that a program and device status information of each module can be collaborated within a specific slot during running of the distributed application, so as to ensure real-time interaction experience during the running of the application. The task execution module is a module that executes the distributed application. Refer to FIG. 12 and FIG. 13. Core software and hardware modules in this embodiment of this application may include an information collection module 001, a task synchronization module 002, and a task scheduling module 003. The information collection module is configured to collect status information of applications and devices, for example, a feature rule corresponding to each application. Administrators can add, delete, modify, and view these rule files. A newly added module is an identification and matching module 031, and is configured to match an application and a device feature, and update a matching and identification list in real time. A real-time scheduling module 032 is configured to: read, from a matching list, a device and an application task that currently need to be adjusted, and determine whether tasks of some devices need to be terminated, whether a task need to be migrated, and whether a task splitting policy needs to be adjusted. A status synchronization module 021 synchronizes, based on a synchronization policy, a data status to a secondary device based on a synchronization device and an application object obtained by the real-time scheduling module and memory arrangement information obtained from the data processing module. A data processing module 022 stores, based on a data arrangement, data in a manner in which the data can be quickly mapped, and provides an operation interface.

An embodiment of this application further provides this application provides an application running method, where the method is applied to a target system, the target system includes a first terminal device and a second terminal device, the first terminal device is communicatively connected to the second terminal device, and the method includes:
when running a target application, the first terminal device obtains device information and/or a software execution environment of the second terminal device;
when the device information and/or the software execution environment of the second terminal device meet/meets an execution requirement of a first task of the target application, the first terminal device transfers task running information of the first task to the second terminal device, and the first terminal device does not execute the first task; and
the second terminal device executes the first task based on the task running information related to the first task.

In a possible implementation, before the task running information related to the first task is transferred to the second terminal device, the method further includes: The first terminal device presents first selection information, where the first selection information indicates at least one task of the target application, and the device information and/or the software execution environment of the second terminal device meet/meets an execution requirement of the at least one task; and receives a first input fed back by a user based on the first selection information; and
the first terminal device enables, based on the first input including the first task, an action of transferring the task running information related to the first task to the second terminal device.

In a possible implementation, after the task running information related to the first task is transferred to the second terminal device, the method further includes:
the first terminal device transfers status data related to the first task to the second terminal device, where the status data is status data required when the second terminal device executes the first task.

In a possible implementation, the first terminal device and the second terminal device communicate with each other in at least one manner of near field communication, an Internet network, Wi-Fi, Bluetooth, ultra-wideband, ZigBee ZigBee, RFID, 4G, 5G, LoRa, SIGFOX, Z-Wave, and NB-loT.

In a possible implementation, the software execution environment includes:
component information, where the component information indicates whether a running component of the target application is deployed on the second terminal device, and the running component is configured to have a capability of executing the first task.

The execution requirement includes:
the running component is deployed on the second terminal device.

In a possible implementation, the device information includes at least one of the following information:
power supply information, processor information, memory information, a transmission bandwidth, input device information, output device information, and a network load.

In a possible implementation, the software execution environment includes a device status of the terminal device and/or a running status of the running component.

When the device status indicates that the second terminal device is powered off or in a sleep mode, a screen-off mode, or a screen-locked mode, the task running information related to the first task includes first indication information, and the first indication information indicates at least one of the following information: The second terminal device is powered on, or the sleep mode, the screen-off mode, or the screen-locked mode ends; the second terminal device runs the running component; and the second terminal device executes the first task by using the running component.

Alternatively, when the device status indicates that the second terminal device is started, and the running status indicates that the second terminal device does not run the running component, the task running information related to the first task includes second indication information, and the second indication information indicates at least one of the following information: The second terminal device runs the running component, and the second electronic device executes the first task by using the running component.

Alternatively, when the device status indicates that the second terminal device is started, and the running status indicates that the second terminal device runs the running component, the task running information related to the first task includes third indication information, and the third indication information indicates that the second terminal device executes the first task by using the running component.

In a game application, to ensure normal running of the application, real-time data synchronization between the first terminal device and the second terminal device needs to be ensured, and a synchronization frequency needs to be very high. For example, status synchronization needs to be performed once for each frame of data. For a 60 fps game, a synchronization operation needs to be performed once every 16 ms. Therefore, a synchronization delay requirement is very high. In an existing implementation, when the first terminal device and the second terminal device are heterogeneous devices, the first terminal device needs to serialize to-be-sent data to obtain binary data, and transfer the binary data to the second terminal device. The second terminal device needs to deserialize the binary data to obtain data that can be identified by the second terminal device. The serialization and deserialization operations cause a specific delay, which is not allowed in a scenario that requires high synchronization, for example, a game.

In this embodiment of this application, the task running information related to the first task may include execution data and index information of the execution data, where the execution data is data required for executing the first task, the index information includes a memory address, the memory address is an address of available storage space on the second terminal device, and the index information indicates the second terminal device to store the execution data in the storage space corresponding to the memory address.

To be specific, the available storage space on the second terminal device may be first obtained, and the task running information and the address of the storage space selected by the first terminal device are transferred to the second terminal device. The second terminal device may store, based on the index information, the execution data in the storage space corresponding to the memory address, and when executing the first task, obtain the execution data from the storage space corresponding to the memory address. Because a task component on the second terminal device may directly execute the first task, format conversion does not need to be performed on the execution data, and the serialization and deserialization operations are not required, so that a processing delay is reduced.

When the second terminal device completes execution of the first task and does not receive execution trigger of another task in the target application from the first terminal device, the second terminal device does not execute the another task of the target application. In this embodiment of this application, a lockstep synchronization mechanism based on a heterogeneous memory arrangement is used, a unified status synchronization data interface is designed, and data addresses of different platforms are packaged and notified to a peer end in sequence (for example, if a plurality of terminal devices are connected to the first terminal device, the first terminal device may transfer the task running information to different terminal devices in a preset sequence). In addition, a strictly limited synchronization method is performed in a lockstep manner (as a terminal device that receives the task running information, the terminal device does not perform other processing related to the target application than the received task running information).

In a possible implementation, the first task is one of a UI display task, an image rendering task, a logical status update task, an AI task, or a data processing or analysis task.

In a possible implementation, a task of the target application includes the first task and a second task, the first task and the second task are rendering tasks, the first task is used to draw a first application interface, the second task is used to draw a second application interface, and the first application interface and the second application interface are different interfaces. The first terminal device may execute the second task, and trigger a display device to display the second application interface. The second terminal device may trigger a display device to display the first application interface. It is equivalent to that content originally displayed on a same display may be split into content on a plurality of interfaces, and rendering and displaying are performed on different terminal devices.

In a possible implementation, a rendering task is used as an example. The second terminal device may execute the first task based on the task running information related to the first task and a display parameter (for example, a resolution or a screen refresh rate of the display device) of the display device of the second terminal device.

In a possible implementation, after executing the first task, the second terminal device may further feed back an execution result to the first terminal device.

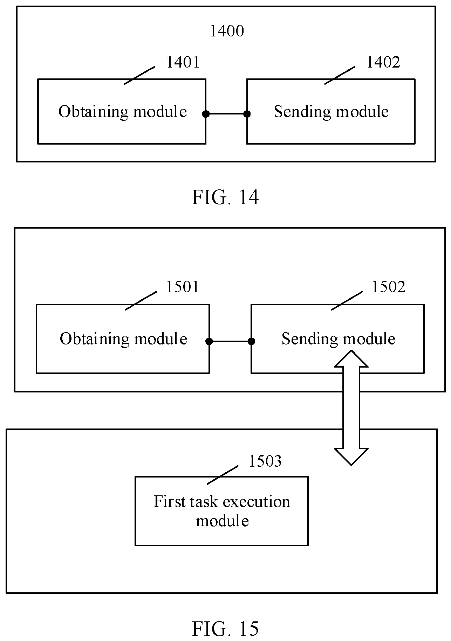

This application further provides an application running apparatus. The application running apparatus is applied to a first terminal device, and the first terminal device is communicatively connected to a second terminal device. FIG. 14 is a schematic diagram of a structure of application running according to an embodiment of this application. As shown in FIG. 14, the application running apparatus 1400 includes:
an obtaining module 1401, configured to: when a target application is run, obtain device information and/or a software execution environment of the second terminal device, where
for descriptions of the obtaining module 1401, refer to the descriptions of step 501, and details are not described herein again; and
a sending module 1402, configured to: when the device information and/or the software execution environment of the second terminal device meet/meets an execution requirement of a first task of the target application, transfer task running information related to the first task to the second terminal device, so that the second terminal device executes the first task based on the task running information, and the first terminal device does not execute the first task, where
for descriptions of the sending module 1402, refer to the descriptions of step 502, and details are not described herein again.

In a possible implementation, the apparatus further includes:
a presentation module, configured to: before the task running information related to the first task is transferred to the second terminal device, present first selection information, where the first selection information indicates at least one task of the target application, and the device information and/or the software execution environment of the second terminal device meet/meets an execution requirement of the at least one task; and receive a first input fed back by a user based on the first selection information; and
enable, based on the first input including the first task, an action of transferring the task running information related to the first task to the second terminal device.

In a possible implementation, the sending module is further configured to: after the task running information related to the first task is transferred to the second terminal device, transfer status data related to the first task to the second terminal device, where the status data is status data required when the second terminal device executes the first task.

In a possible implementation, the first terminal device and the second terminal device communicate with each other in at least one manner of near field communication, an Internet network, Wi-Fi, Bluetooth, ultra-wideband, ZigBee ZigBee, RFID, 4G, 5G, LoRa, SIGFOX, Z-Wave, and NB-loT.

In a possible implementation, the software execution environment includes:
component information, where the component information indicates whether a running component of the target application is deployed on the second terminal device, and the running component is configured to have a capability of executing the first task.

The execution requirement includes:
the running component is deployed on the second terminal device.

In a possible implementation, the device information includes at least one of the following information:
power supply information, processor information, memory information, a transmission bandwidth, input device information, output device information, and a network load.

In a possible implementation, the software execution environment includes a device status of the terminal device and/or a running status of the running component.

When the device status indicates that the second terminal device is powered off or in a sleep mode, a screen-off mode, or a screen-locked mode, the task running information related to the first task includes first indication information, and the first indication information indicates at least one of the following information: The second terminal device is powered on, or the sleep mode, the screen-off mode, or the screen-locked mode ends; the second terminal device runs the running component; and the second terminal device executes the first task by using the running component.

Alternatively, when the device status indicates that the second terminal device is started, and the running status indicates that the second terminal device does not run the running component, the task running information related to the first task includes second indication information, and the second indication information indicates at least one of the following information: The second terminal device runs the running component, and the second electronic device executes the first task by using the running component.

Alternatively, when the device status indicates that the second terminal device is started, and the running status indicates that the second terminal device runs the running component, the task running information related to the first task includes third indication information, and the third indication information indicates that the second terminal device executes the first task by using the running component.

In a possible implementation, the obtaining module is specifically configured to:
obtain device information of a plurality of terminal devices connected to the first terminal device, where the plurality of terminal devices include the second terminal device.

The apparatus further includes:
a terminal selection module, configured to: before the task running information of the first task is transferred to the second terminal device, enable selection for the second terminal device in the plurality of terminal devices.

In a possible implementation, the terminal selection module is specifically configured to:
present second selection information, where the second selection information indicates the user to perform selection from the plurality of terminal devices; and receive a second input fed back by the user based on the second selection information; and
enable selection for the second terminal device in the plurality of terminal devices based on the second input including the second terminal device.

In a possible implementation, the terminal selection module is specifically configured to:
select, from the plurality of terminal devices based on the device information of the second terminal device, device information that best meets the execution requirement of the first task, and enable selection for the second terminal device in the plurality of terminal devices.

In a possible implementation, the target application task includes the first task and a second task.

The apparatus further includes:
the task execution module, configured to: when the device information of the second terminal device does not meet an execution requirement of the second task of the target application, keep execution of the second task.

In a possible implementation, the task running information related to the first task includes:
execution data and index information of the execution data, where the execution data is data required for executing the first task, the index information includes a memory address, the memory address is an address of available storage space on the second terminal device, and the index information indicates the second terminal device to store the execution data in the storage space corresponding to the memory address.

In a possible implementation, the first task is one of a UI display task, an image rendering task, a logical status update task, an AI task, or a data processing or analysis task.

This application further provides an application running apparatus. The application running apparatus is used in a target system, the target system includes a first terminal device and a second terminal device, and the first terminal device is communicatively connected to the second terminal device. FIG. 15 is a schematic diagram of a structure of an application running apparatus according to an embodiment of this application. As shown in FIG. 15, the first terminal device includes:
an obtaining module 1501, configured to: when a target application is run, obtain device information and/or a software execution environment of the second terminal device, where
for descriptions of the obtaining module 1501, refer to the descriptions of step 501, and details are not described herein again; and
a sending module 1502, configured to: when the device information and/or the software execution environment of the second terminal device meet/meets an execution requirement of a first task of the target application, transfer task running information of the first task to the second terminal device, where the first terminal device does not execute the first task, where
for descriptions of the sending module 1502, refer to the descriptions of step 502, and details are not described herein again.

The second terminal device includes:
a first task execution module 1503, configured to execute the first task based on the task running information related to the first task.

For descriptions of the first task execution module 1503, refer to the descriptions of step 503, and details are not described herein again.

In a possible implementation, the first terminal device further includes:
a presentation module, configured to: present, by the first terminal device, first selection information, where the first selection information indicates at least one task of the target application, and the device information and/or the software execution environment of the second terminal device meet/meets an execution requirement of the at least one task; and receive a first input fed back by a user based on the first selection information; and
enable, based on the first input including the first task, an action of transferring the task running information related to the first task to the second terminal device.

In a possible implementation, the sending module is further configured to: after the task running information related to the first task is transferred to the second terminal device, transfer, by the first terminal device, status data related to the first task to the second terminal device, where the status data is status data required when the second terminal device executes the first task.

In a possible implementation, the first terminal device and the second terminal device communicate with each other in at least one manner of near field communication, Wi-Fi, Bluetooth, ultra-wideband, ZigBee ZigBee, RFID, 4G, 5G, LoRa, SIGFOX, Z-Wave, and NB-loT.

In a possible implementation, the device information includes:
component information, where the component information indicates whether a running component of the target application is deployed on the second terminal device, and the running component is configured to have a capability of executing the first task.

The execution requirement includes:
the running component is deployed on the second terminal device.

In a possible implementation, the device information includes at least one of the following information:
power supply information, processor information, memory information, a transmission bandwidth, input device information, output device information, and a network load.

In a possible implementation, the software execution environment includes a device status of the terminal device and/or a running status of the running component.

When the device status indicates that the second terminal device is powered off or in a sleep mode, a screen-off mode, or a screen-locked mode, the task running information related to the first task includes first indication information, and the first indication information indicates at least one of the following information: The second terminal device is powered on, or the sleep mode, the screen-off mode, or the screen-locked mode ends; the second terminal device runs the running component; and the second terminal device executes the first task by using the running component.

Alternatively, when the device status indicates that the second terminal device is started, and the running status indicates that the second terminal device does not run the running component, the task running information related to the first task includes second indication information, and the second indication information indicates at least one of the following information: The second terminal device runs the running component, and the second electronic device executes the first task by using the running component.

Alternatively, when the device status indicates that the second terminal device is started, and the running status indicates that the second terminal device runs the running component, the task running information related to the first task includes third indication information, and the third indication information indicates that the second terminal device executes the first task by using the running component.

In a possible implementation, the task running information related to the first task includes:
execution data and index information of the execution data, where the execution data is data required for executing the first task, the index information includes a memory address, the memory address is an address of available storage space on the second terminal device, and the index information indicates the second terminal device to store the execution data in the storage space corresponding to the memory.

The first task execution module is specifically configured to:
store, based on the index information, the execution data in the storage space corresponding to the memory address; and
when executing the first task, obtain the execution data from the storage space corresponding to the memory address.

In a possible implementation, when the second terminal device completes execution of the first task and does not receive execution trigger of another task in the target application from the first terminal device, the second terminal device does not execute the another task of the target application.

In a possible implementation, the first task is one of a UI display task, an image rendering task, a logical status update task, an AI task, or a data processing or analysis task.

In a possible implementation, a task of the target application includes the first task and a second task, the first task and the second task are rendering tasks, the first task is used to draw a first application interface, the second task is used to draw a second application interface, and the first application interface and the second application interface are different interfaces.

The first terminal device further includes:
a second task execution module, configured to execute the second task, and trigger a display device to display the second application interface.

The first task execution module is specifically configured to:
trigger, by the second terminal device, a display device to display the first application interface.

In a possible implementation, the first task is a rendering task.

The first task execution module is specifically configured to:
execute the first task based on the task running information related to the first task and a display parameter of the display device of the second terminal device.

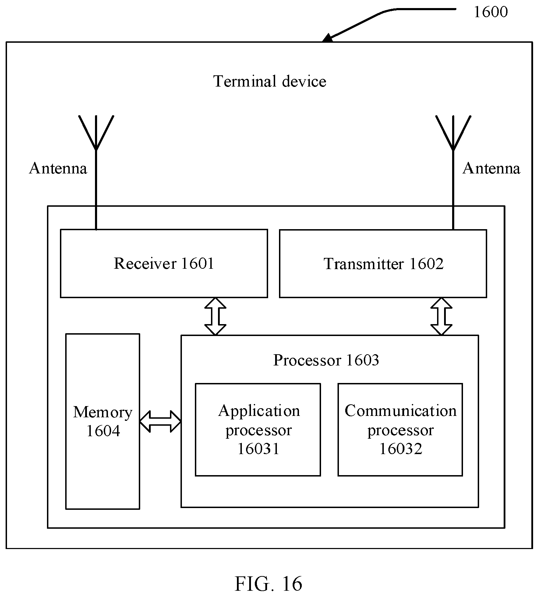

The following describes a terminal device provided in embodiments of this application. The terminal device may be the terminal device (for example, a first terminal device or a second terminal device) described in embodiments of this application. FIG. 16 is a schematic diagram of a structure of the terminal device according to an embodiment of this application. A terminal device 1600 may be specifically represented as a virtual reality VR device, a mobile phone, a tablet, a notebook computer, an intelligent wearable device, or the like. This is not limited herein. Specifically, the terminal device 1600 includes a receiver 1601, a transmitter 1602, a processor 1603 (there may be one or more processors 1603 in the terminal device 1600, and one processor is used as an example in FIG. 16), and a memory 1604. The processor 1603 may include an application processor 16031 and a communication processor 16032. In some embodiments of this application, the receiver 1601, the transmitter 1602, the processor 1603, and the memory 1604 may be connected by using a bus or in another manner.

The memory 1604 may include a read-only memory and a random access memory, and provide instructions and data to the processor 1603. A part of the memory 1604 may further include a non-volatile random access memory (non-volatile random access memory, NVRAM). The memory 1604 stores processor and operation instructions, executable modules or data structures, or a subset thereof, or an extended set thereof. The operation instructions may include various operation instructions for implementing various operations.

The processor 1603 controls an operation of the terminal device. In a specific application, components of the terminal device are coupled together through a bus system. In addition to a data bus, the bus system may further include a power bus, a control bus, a status signal bus, and the like. However, for clear description, various types of buses in the figure are marked as the bus system.

The methods disclosed in embodiments of this application may be applied to the processor 1603 or may be implemented by the processor 1603. The processor 1603 may be an integrated circuit chip and has a signal processing capability. In an implementation process, steps in the foregoing method can be implemented by using a hardware integrated logic circuit in the processor 1603, or by using instructions in a form of software. The processor 1603 may be a general-purpose processor, a digital signal processor (digital signal processing, DSP), a microprocessor, or a microcontroller, an application-specific integrated circuit (application specific integrated circuit, ASIC), a field programmable gate array (field-programmable gate array, FPGA) or another programmable logic device, a discrete gate or transistor logic device, or a discrete hardware component. The processor 1603 may implement or perform the methods, steps, and logical block diagrams that are disclosed in embodiments of this application. The general-purpose processor may be a microprocessor, or the processor may be any conventional processor, or the like. Steps of the methods disclosed with reference to embodiments of this application may be directly executed and accomplished by a hardware decoding processor, or may be executed and accomplished by using a combination of hardware and software modules in a decoding processor. The software module may be located in a mature storage medium in the art, for example, a random access memory, a flash memory, a read-only memory, a programmable read-only memory, an electrically erasable programmable memory, or a register. The storage medium is located in the memory 1604. The processor 1603 reads information in the memory 1604, and completes the steps of the methods in combination with hardware of the processor. Specifically, the processor 1603 may read the information in the memory 1604, and complete step 501 to step 503 in the foregoing embodiments in combination with the hardware of the processor 1603.

The receiver 1601 may be configured to receive input digital or character information, and generate signal input related to a related setting and function control of the terminal device. The transmitter 1602 may be configured to output digit or character information through a first interface. The transmitter 1602 may be further configured to send instructions to a disk group through the first interface, to modify data in the disk group. The transmitter 1602 may further include a display device, for example, a display.

An embodiment of this application further provides a computer program product. When the computer program product runs on a computer, the computer is enabled to perform the steps of the application running method described in the embodiment corresponding to FIG. 5 in the foregoing embodiments.

An embodiment of this application further provides a computer-readable storage medium. The computer-readable storage medium stores a program for signal processing. When the program is run on a computer, the computer is enabled to perform steps in the image processing method in the method embodiments described above.

The image display apparatus provided in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that a chip in the execution device performs the data processing method described in the foregoing embodiments, or a chip in the training device performs the data processing method described in the foregoing embodiments. Optionally, the storage unit is a storage unit in the chip, for example, a register or a cache. Alternatively, the storage unit may be a storage unit that is in a radio access device end and that is located outside the chip, for example, a read-only memory (read-only memory, ROM) or another type of static storage device that may store static information and instructions, for example, a random access memory (random access memory, RAM).

In addition, it should be noted that the described apparatus embodiments are merely examples. The units described as separate parts may or may not be physically separate, and parts displayed as units may or may not be physical units, and may be located in one position, or may be distributed on a plurality of network units. Some or all the modules may be selected based on actual needs to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or certainly may be implemented by dedicated hardware, including an application-specific integrated circuit, a dedicated CPU, a dedicated memory, a dedicated component, and the like. Generally, any functions that can be performed by a computer program can be easily implemented by using corresponding hardware, and a specific hardware structure used to achieve a same function may be of various forms, for example, in a form of an analog circuit, a digital circuit, a dedicated circuit, or the like. However, in this application, a software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or a CD-ROM of a computer, and includes several instructions for instructing a computer device (which may be a personal computer, a server, a network device, or the like) to perform the methods described in embodiments of this application.

All or some of the foregoing embodiments may be implemented through software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk or a magnetic tape), an optical medium (for example, a DVD), a semiconductor medium (for example, a solid state disk (Solid State Disk, SSD)), or the like.

## Claims

1. An application running method, wherein the method is applied to a first terminal device, the first terminal device is communicatively connected to the second terminal device, and the method comprises:
when running a target application, obtaining device information and/or a software execution environment of the second terminal device; and
when the device information and/or the software execution environment of the second terminal device meet/meets an execution requirement of a first task of the target application, transferring task running information related to the first task to the second terminal device, so that the second terminal device executes the first task based on the task running information, and the first terminal device does not execute the first task.

2. The method according to claim 1, wherein the target application further comprises a second task, and the method further comprises:
when the second terminal device executes the first task based on the task running information, keeping execution of the second task on the first terminal device.

3. The method according to claim 1 or 2, wherein before the transferring task running information related to the first task to the second terminal device, the method further comprises:
receiving a first input of a user, wherein the first input indicates to transfer the task running information related to the first task to the second terminal device.

4. The method according to claim 3, wherein before the transferring task running information related to the first task to the second terminal device, the method further comprises:
presenting first selection information, wherein the first selection information indicates at least one task of the target application, and the device information and/or the software execution environment of the second terminal device meet/meets an execution requirement of the at least one task; and
the receiving a first input of a user comprises:
receiving a first input fed back by the user based on the first selection information, wherein the first input comprises the first task.

5. The method according to any one of claims 1 to 4, wherein after the transferring task running information related to the first task to the second terminal device, the method further comprises:
transferring status data related to the first task to the second terminal device, wherein the status data is status data required when the second terminal device executes the first task.

6. The method according to any one of claims 1 to 5, wherein the first terminal device and the second terminal device communicate with each other in at least one manner of near field communication, an Internet network, Wi-Fi, Bluetooth, ultra-wideband, ZigBee ZigBee, RFID, 4G, 5G, LoRa, SIGFOX, Z-Wave, and NB-loT.

7. The method according to any one of claims 1 to 6, wherein the software execution environment comprises:
component information, wherein the component information indicates whether a running component of the target application is deployed on the second terminal device, and the running component is configured to have a capability of executing the first task; and
the execution requirement comprises:
the running component is deployed on the second terminal device.

8. The method according to any one of claims 1 to 7, wherein the device information comprises at least one of the following information:
power supply information, processor information, memory information, a transmission bandwidth, input device information, output device information, and a network load.

9. The method according to claim 7 or 8, wherein the software execution environment comprises a device status of the terminal device and/or a running status of the running component; and
when the device status indicates that the second terminal device is powered off or in a sleep mode, a screen-off mode, or a screen-locked mode, the task running information related to the first task comprises first indication information, and the first indication information indicates at least one of the following information: the second terminal device is powered on, or the sleep mode, the screen-off mode, or the screen-locked mode ends; the second terminal device runs the running component; and the second terminal device executes the first task by using the running component.
when the device status indicates that the second terminal device is started, and the running status indicates that the second terminal device does not run the running component, the task running information related to the first task comprises second indication information, and the second indication information indicates at least one of the following information: the second terminal device runs the running component, and the second electronic device executes the first task by using the running component; or
when the device status indicates that the second terminal device is started, and the running status indicates that the second terminal device runs the running component, the task running information related to the first task comprises third indication information, and the third indication information indicates that the second terminal device executes the first task by using the running component.

10. The method according to any one of claims 1 to 9, wherein the obtaining device information of the second terminal device comprises: obtaining device information of a plurality of terminal devices connected to the first terminal device, wherein the plurality of terminal devices comprise the second terminal device; and
before the transferring task running information of the first task to the second terminal device, the method further comprises:
enabling selection for the second device in the plurality of terminal devices.

11. The method according to claim 10, wherein the enabling selection for the second device in the plurality of terminal devices comprises:
receiving a second input of the user, wherein the second input indicates to select the second device from the plurality of terminal devices.

12. The method according to claim 11, wherein before the transferring task running information of the first task to the second terminal device, the method further comprises:
presenting second selection information, wherein the second selection information indicates the user to perform selection from the plurality of terminal devices; and
the receiving a second input of the user comprises:
receiving a second input fed back by the user based on the second selection information, wherein the second input comprises the second terminal device.

13. The method according to claim 10, wherein the enabling selection for the second device in the plurality of terminal devices comprises:
selecting, from the plurality of terminal devices based on the device information of the second terminal device, device information that best meets the execution requirement of the first task, and enabling selection for the second device in the plurality of terminal devices.

14. The method according to any one of claims 1 to 13, wherein the task running information related to the first task comprises:
execution data and index information of the execution data, wherein the execution data is data required for executing the first task, the index information comprises a memory address, the memory address is an address of available storage space on the second terminal device, and the index information indicates the second terminal device to store the execution data in the memory space corresponding to the memory address.

15. The method according to any one of claims 1 to 14, wherein the first task is one of a UI display task, an image rendering task, a logical status update task, an AI task, or a data processing or analysis task.

16. An application running method, wherein the method is applied to a target system, the target system comprises a first terminal device and a second terminal device, the first terminal device is communicatively connected to the second terminal device, and the method comprises:
when running a target application, obtaining, by the first terminal device, device information and/or a software execution environment of the second terminal device;
when the device information and/or the software execution environment of the second terminal device meet/meets an execution requirement of a first task of the target application, transferring, by the first terminal device, task running information of the first task to the second terminal device, and skipping, by the first terminal device, executing the first task; and
executing, by the second terminal device, the first task based on the task running information related to the first task.

17. The method according to claim 16, wherein the target application further comprises a second task, and the method further comprises:
when the second terminal device executes the first task based on the task running information, keeping, by the first terminal device, execution of the second task.

18. The method according to claim 17, wherein before the transferring task running information related to the first task to the second terminal device, the method further comprises: receiving, by the first terminal device, a first input of a user, wherein the first input indicates to transfer the task running information related to the first task to the second terminal device.

19. The method according to claim 18, wherein before the transferring task running information related to the first task to the second terminal device, the method further comprises:
presenting, by the first terminal device, first selection information, wherein the first selection information indicates at least one task of the target application, and the device information and/or the software execution environment of the second terminal device meet/meets an execution requirement of the at least one task; and
the receiving a first input of a user comprises:
receiving a first input fed back by the user based on the first selection information, wherein the first input comprises the first task.

20. The method according to any one of claims 16 to 19, wherein
after the transferring task running information related to the first task to the second terminal device, the method further comprises:
transferring, by the first terminal device, status data related to the first task to the second terminal device, wherein the status data is status data required when the second terminal device executes the first task.

21. The method according to any one of claims 16 to 20, wherein the first terminal device and the second terminal device communicate with each other in at least one manner of near field communication, an Internet network, Wi-Fi, Bluetooth, ultra-wideband, ZigBee ZigBee, RFID, 4G, 5G, LoRa, SIGFOX, Z-Wave, and NB-loT.

22. The method according to any one of claims 16 to 21, wherein the software execution environment comprises:
component information, wherein the component information indicates whether a running component of the target application is deployed on the second terminal device, and the running component is configured to have a capability of executing the first task; and
the execution requirement comprises:
the running component is deployed on the second terminal device.

23. The method according to any one of claims 16 to 22, wherein the device information comprises at least one of the following information:
power supply information, processor information, memory information, a transmission bandwidth, input device information, output device information, and a network load.

24. The method according to claim 22 or 23, wherein the software execution environment comprises a device status of the terminal device and/or a running status of the running component; and
when the device status indicates that the second terminal device is powered off or in a sleep mode, a screen-off mode, or a screen-locked mode, the task running information related to the first task comprises first indication information, and the first indication information indicates at least one of the following information: the second terminal device is powered on, or the sleep mode, the screen-off mode, or the screen-locked mode ends; the second terminal device runs the running component; and the second terminal device executes the first task by using the running component; or
when the device status indicates that the second terminal device is started, and the running status indicates that the second terminal device does not run the running component, the task running information related to the first task comprises second indication information, and the second indication information indicates at least one of the following information: the second terminal device runs the running component, and the second electronic device executes the first task by using the running component; or
when the device status indicates that the second terminal device is started, and the running status indicates that the second terminal device runs the running component, the task running information related to the first task comprises third indication information, and the third indication information indicates that the second terminal device executes the first task by using the running component.

25. The method according to any one of claims 16 to 24, wherein the task running information related to the first task comprises:
execution data and index information of the execution data, wherein the execution data is data required for executing the first task, the index information comprises a memory address, the memory address is an address of available storage space on the second terminal device, and the index information indicates the second terminal device to store the execution data in the memory space corresponding to the memory address; and
the executing, by the second terminal device, the first task based on the task running information related to the first task comprises:
storing, by the second terminal device based on the index information, the execution data in the storage space corresponding to the memory address; and
when executing the first task, obtaining, by the second terminal device, the execution data from the storage space corresponding to the memory address.

26. The method according to any one of claims 16 to 25, wherein
when the second terminal device completes execution of the first task and does not receive execution trigger of another task in the target application from the first terminal device, skipping, by the second terminal device, executing the another task of the target application.

27. The method according to any one of claims 16 to 26, wherein a task of the target application comprises the first task and a second task, the first task and the second task are rendering tasks, the first task is used to draw a first application interface, the second task is used to draw a second application interface, and the first application interface and the second application interface are different interfaces; and
the method further comprises:
executing, by the first terminal device, the second task, and triggering a display device to display the second application interface; and
triggering, by the second terminal device, a display device to display the first application interface.

28. The method according to any one of claims 16 to 27, wherein the first task is a rendering task; and
the executing, by the second terminal device, the first task based on the task running information related to the first task comprises:
executing, by the second terminal device, the first task based on the task running information related to the first task and a display parameter of the display device of the second terminal device.

29. An application running method, wherein the method is applied to a first terminal device, the first terminal device is communicatively connected to the second terminal device, and the method comprises:
running a target application, wherein the target application comprises a first task, and the first task is a part of tasks in the target application, wherein
the target application is an application having a dialog function, and the first task is UI display of a chat box of a part of or all chat objects, UI display of a video chat, or UI display of an audio chat; or
the target application is a drawing application, a text editing application, an image editing application, or an audio and video editing application, and the first task is UI display of an editing tool interface or UI display of an editing object; and
keeping execution of the second task, and transferring task running information related to the first task to the second terminal device, so that the second terminal device executes the first task based on the task running information, and the first terminal device does not execute the first task.

30. The method according to claim 29, wherein the target application further comprises the second task different from the first task;
the target application is the application having a dialog function, and the second task is UI display of a chat object different from that in the first task, UI display of a video chat, or UI display of an audio chat; or
the target application is the drawing application, the text editing application, the image editing application, or the audio and video editing application, and the second task is UI display of an editing tool interface or UI display of an editing object; and
the method further comprises:
when device information of the second terminal device does not meet an execution requirement of the second task of the target application, keeping execution of the second task.

31. An application running apparatus, wherein the apparatus is used in a first terminal device, the first terminal device is communicatively connected to the second terminal device, and the apparatus comprises:
an obtaining module, configured to: when a target application is run, obtain device information and/or a software execution environment of the second terminal device; and
a sending module, configured to: when the device information and/or the software execution environment of the second terminal device meet/meets an execution requirement of a first task of the target application, transfer task running information related to the first task to the second terminal device, so that the second terminal device executes the first task based on the task running information, and the first terminal device does not execute the first task.

32. The apparatus according to claim 31, wherein the target application further comprises a second task, and the apparatus further comprises:
a task execution module, configured to: when the second terminal device executes the first task based on the task running information, keep execution of the second task on the first terminal device.

33. The apparatus according to claim 31 or 32, wherein the apparatus further comprises:
a receiving module, configured to: before the task running information related to the first task is transferred to the second terminal device, receive a first input of a user, wherein the first input indicates to transfer the task running information related to the first task to the second terminal device.

34. The apparatus according to claim 33, wherein the apparatus further comprises:
a presentation module, configured to: before the task running information related to the first task is transferred to the second terminal device, present first selection information, wherein the first selection information indicates at least one task of the target application, and the device information and/or the software execution environment of the second terminal device meet/meets an execution requirement of the at least one task; and
the receiving module is specifically configured to:
receive a first input fed back by the user based on the first selection information, wherein the first input comprises the first task.

35. The apparatus according to any one of claims 31 to 34, wherein the sending module is further configured to: after the task running information related to the first task is transferred to the second terminal device, transfer status data related to the first task to the second terminal device, wherein the status data is status data required when the second terminal device executes the first task.

36. The apparatus according to any one of claims 31 to 35, wherein the first terminal device and the second terminal device communicate with each other in at least one manner of near field communication, an Internet network, Wi-Fi, Bluetooth, ultra-wideband, ZigBee ZigBee, RFID, 4G, 5G, LoRa, SIGFOX, Z-Wave, and NB-loT.

37. The apparatus according to any one of claims 31 to 36, wherein the software execution environment comprises:
component information, wherein the component information indicates whether a running component of the target application is deployed on the second terminal device, and the running component is configured to have a capability of executing the first task; and
the execution requirement comprises:
the running component is deployed on the second terminal device.

38. The apparatus according to any one of claims 31 to 37, wherein the device information comprises at least one of the following information:
power supply information, processor information, memory information, a transmission bandwidth, input device information, output device information, and a network load.

39. The apparatus according to claim 37 or 38, wherein the software execution environment comprises a device status of the terminal device and/or a running status of the running component; and
when the device status indicates that the second terminal device is powered off or in a sleep mode, a screen-off mode, or a screen-locked mode, the task running information related to the first task comprises first indication information, and the first indication information indicates at least one of the following information: the second terminal device is powered on, or the sleep mode, the screen-off mode, or the screen-locked mode ends; the second terminal device runs the running component; and the second terminal device executes the first task by using the running component; or
when the device status indicates that the second terminal device is started, and the running status indicates that the second terminal device does not run the running component, the task running information related to the first task comprises second indication information, and the second indication information indicates at least one of the following information: the second terminal device runs the running component, and the second electronic device executes the first task by using the running component; or
when the device status indicates that the second terminal device is started, and the running status indicates that the second terminal device runs the running component, the task running information related to the first task comprises third indication information, and the third indication information indicates that the second terminal device executes the first task by using the running component.

40. The apparatus according to any one of claims 31 to 39, wherein the obtaining module is specifically configured to:
obtain device information of a plurality of terminal devices connected to the first terminal device, wherein the plurality of terminal devices comprise the second terminal device; and
the apparatus further comprises:
a terminal selection module, configured to: before the task running information of the first task is transferred to the second terminal device, enable selection for the second terminal device in the plurality of terminal devices.

41. The apparatus according to claim 40, wherein the terminal selection module is specifically configured to:
receive a second input of the user, wherein the second input indicates to select the second device from the plurality of terminal devices.

42. The apparatus according to claim 41, wherein the terminal selection module is specifically configured to:
present second selection information, wherein the second selection information indicates the user to perform selection from the plurality of terminal devices; and
receive a second input fed back by the user based on the second selection information, wherein the second input comprises the second terminal device.

43. The apparatus according to claim 40, wherein the terminal selection module is specifically configured to:
select, from the plurality of terminal devices based on the device information of the second terminal device, device information that best meets the execution requirement of the first task, and enable selection for the second terminal device in the plurality of terminal devices.

44. The apparatus according to any one of claims 41 to 43, wherein the task running information related to the first task comprises:
execution data and index information of the execution data, wherein the execution data is data required for executing the first task, the index information comprises a memory address, the memory address is an address of available storage space on the second terminal device, and the index information indicates the second terminal device to store the execution data in the memory space corresponding to the memory address.

45. The apparatus according to any one of claims 31 to 44, wherein the first task is one of a UI display task, an image rendering task, a logical status update task, an AI task, or a data processing or analysis task.

46. An application running apparatus, wherein the apparatus is used in a target system, the target system comprises a first terminal device and a second terminal device, the first terminal device is communicatively connected to the second terminal device, and the first terminal device comprises:
an obtaining module, configured to: when a target application is run, obtain device information and/or a software execution environment of the second terminal device; and
a sending module, configured to: when the device information and/or the software execution environment of the second terminal device meet/meets an execution requirement of a first task of the target application, transfer task running information of the first task to the second terminal device, wherein the first terminal device does not execute the first task; and
the second terminal device comprises:
a first task execution module, configured to execute the first task based on the task running information related to the first task.

47. The apparatus according to claim 46, wherein the target application further comprises a second task, and the second terminal device comprises:
a second task execution module, configured to: when the second terminal device executes the first task based on the task running information, keep, by the first terminal device, execution of the second task.

48. The apparatus according to claim 47, wherein the first terminal device further comprises:
a receiving module, configured to: before the task running information related to the first task is transferred to the second terminal device, receive a first input of a user, wherein the first input indicates to transfer the task running information related to the first task to the second terminal device.

49. The apparatus according to claim 48, wherein the first terminal device further comprises:
a presentation module, configured to present, by the first terminal device, first selection information, wherein the first selection information indicates at least one task of the target application, and the device information and/or the software execution environment of the second terminal device meet/meets an execution requirement of the at least one task; and
the receiving module is specifically configured to:
receive a first input fed back by the user based on the first selection information, wherein the first input comprises the first task.

50. The apparatus according to any one of claims 46 to 49, wherein the sending module is further configured to: after the task running information related to the first task is transferred to the second terminal device, transfer, by the first terminal device, status data related to the first task to the second terminal device, wherein the status data is status data required when the second terminal device executes the first task.

51. The apparatus according to any one of claims 46 to 50, wherein the first terminal device and the second terminal device communicate with each other in at least one manner of near field communication, Wi-Fi, Bluetooth, ultra-wideband, ZigBee ZigBee, RFID, 4G, 5G, LoRa, SIGFOX, Z-Wave, and NB-loT.

52. The apparatus according to any one of claims 46 to 51, wherein the device information comprises:
component information, wherein the component information indicates whether a running component of the target application is deployed on the second terminal device, and the running component is configured to have a capability of executing the first task; and
the execution requirement comprises:
the running component is deployed on the second terminal device.

53. The apparatus according to any one of claims 46 to 52, wherein the device information comprises at least one of the following information:
power supply information, processor information, memory information, a transmission bandwidth, input device information, output device information, and a network load.

54. The apparatus according to claim 52 or 53, wherein the software execution environment comprises a device status of the terminal device and/or a running status of the running component; and
when the device status indicates that the second terminal device is powered off or in a sleep mode, a screen-off mode, or a screen-locked mode, the task running information related to the first task comprises first indication information, and the first indication information indicates at least one of the following information: the second terminal device is powered on, or the sleep mode, the screen-off mode, or the screen-locked mode ends; the second terminal device runs the running component; and the second terminal device executes the first task by using the running component; or
when the device status indicates that the second terminal device is started, and the running status indicates that the second terminal device does not run the running component, the task running information related to the first task comprises second indication information, and the second indication information indicates at least one of the following information: the second terminal device runs the running component, and the second electronic device executes the first task by using the running component; or
when the device status indicates that the second terminal device is started, and the running status indicates that the second terminal device runs the running component, the task running information related to the first task comprises third indication information, and the third indication information indicates that the second terminal device executes the first task by using the running component.

55. The apparatus according to any one of claims 46 to 54, wherein the task running information related to the first task comprises:
execution data and index information of the execution data, wherein the execution data is data required for executing the first task, the index information comprises a memory address, the memory address is an address of available storage space on the second terminal device, and the index information indicates the second terminal device to store the execution data in the memory space corresponding to the memory address; and
the first task execution module is specifically configured to:
store, based on the index information, the execution data in the storage space corresponding to the memory address; and
when executing the first task, obtain the execution data from the storage space corresponding to the memory address.

56. The apparatus according to any one of claims 46 to 55, wherein
when the second terminal device completes execution of the first task and does not receive execution trigger of another task in the target application from the first terminal device, the second terminal device does not execute the another task of the target application.

57. The apparatus according to any one of claims 46 to 56, wherein a task of the target application comprises the first task and a second task, the first task and the second task are rendering tasks, the first task is used to draw a first application interface, the second task is used to draw a second application interface, and the first application interface and the second application interface are different interfaces;
the first terminal device further comprises:
a second task execution module, configured to execute the second task, and trigger a display device to display the second application interface; and
the first task execution module is specifically configured to:
trigger, by the second terminal device, a display device to display the first application interface.

58. The apparatus according to any one of claims 46 to 57, wherein the first task is a rendering task; and
the first task execution module is specifically configured to:
execute the first task based on the task running information related to the first task and a display parameter of the display device of the second terminal device.

59. A terminal device, wherein the device comprises a processor, a memory, and a bus;
the processor and the memory are connected through the bus;
the memory is configured to store a computer program or instructions; and
the processor is configured to invoke or execute the program or the instructions stored in the memory, to implement steps of the method according to any one of claims 1 to 15, 29, and 30.

60. A computer-readable storage medium, comprising a program, wherein when the program is run on a computer, the computer is enabled to perform the method according to any one of claims 1 to 30.

61. A computer program product comprising instructions, wherein when the computer program product runs on a terminal, the terminal is enabled to perform the method according to any one of claims 1 to 30.
